# EUROPÄISCHE PATENTSCHRIFT

(11) **EP 3 784 818 B1**
(45) Veröffentlichungstag und Bekanntmachung des Hinweises auf die Patenterteilung: **24.01.2024**
(21) Anmeldenummer: 19720538.8
(22) Anmeldetag: 26.04.2019
(51) Int. Cl.: H10N 30/071, C25B 1/04, C25B 9/00

(54) **ELEKTRODE MIT INTEGRIERTER MECHANISCHER SCHWINGUNGSANREGUNG**
ELECTRODE HAVING INTEGRATED EXCITATION OF MECHANICAL OSCILLATION
ÉLECTRODE DOTÉE D'UNE EXCITATION D'OSCILLATIONS MÉCANIQUES INTÉGRÉE

(30) Priorität: 26.04.2018 DE 102018110032
(43) Veröffentlichungstag der Anmeldung: 03.03.2021
(73) Patentinhaber: Fraunhofer-Gesellschaft zur Förderung der angewandten Forschung e.V., 80686 München (DE)
(72) Erfinder: FRIEDRICH, Hans-Jürgen, 01833 Stolpen (DE); REBENKLAU, Lars, 01279 Dresden (DE); NEUMEISTER, Peter, 01219 Dresden (DE); VIEHWEGER, Katrin, 01328 Dresden (DE); SCHÖNECKER, Andreas, 01705 Freital (DE)
(74) Vertreter: Kailuweit & Uhlemann Patentanwälte Partnerschaft mbB
(86) Internationale Anmeldenummer: PCT/EP2019/060709
(87) Internationale Veröffentlichungsnummer: WO 2019/207092

(56) Entgegenhaltungen:
- WO-A1-2017/090431
- JP-A- 2003 105 590
- US-A1- 2010 089 746
- US-A1- 2011 295 241

## Beschreibung

Die Erfindung betrifft Elektrode mit integrierter Schwingungsanregung, eine Elektrolysezelle enthaltend diese, ein Verfahren zur Herstellung dieser und ihre Verwendung.

Die Belastung von Grund- und Oberflächenwässem, durch Eintrag von Schadstoffen und Abwässern stellt ein enormes Problem der heutigen Zeit dar. Insbesondere Rückstände von Pharmazeutika und derTransformationsprodukte, welche aus medikamentöser Behandlungen stammen, beispielsweise endokrin wirksame Spurenstoffe wie Hormone oder Antibiotika, sorgen zunehmend für eine schädigende Kontamination von Oberflächen- und Grundwässern.

So werden laut Umweltbundesamt allein in Deutschland ca. 38 kt an pharmazeutischen Wirkstoffen pro Jahr verbraucht, wobei diese ca. 2800 verschiedene zugelassene Verbindungen umfassen (siehe auch https://www.umweltbundesamt.de/themen/chemikalien/ arzneimittel/humanarzneimittel/arzneimittel-umwelt).

Auch andere besorgniserregende, beispielsweise für den Gewässerschutz relevante Stoffe, sog. REACH relevante Stoffe (REACH = Registration, Evaluation, Authorisation and Restriction of Chemicals) sind in zahlreichen Abwässern vorhanden.

Über Abwässer gelangen diese in Kläranlagensysteme, wo sie teilweise biologisch zersetzt werden. Viele der Wirkstoffe sind jedoch nicht auf biologischem Wege abbaubar, sodass die Weiter- und Neuentwicklung effizienter Abwasseraufbereitungsverfahren unerlässlich wird.

In zahlreichen Literaturstellen finden sich Informationen darüber, dass mittels herkömmlicher Wasserbehandlungstechnologien eine Abtrennung REACH relevanter Spurenstoffe nicht oder zumindest nur eingeschränkt möglich ist. Dabei treten Substanzklassen-spezifisch große Variationen auf. So werden z.B. Fluortenside oder polare jodhaltige Röntgenkostrastmittel auf Grund ihrer chemischen Beständigkeit nicht zurückgehalten und gelangen weitgehend unverändert in die Umwelt. Zu den Substanzen, die ebenfalls schlecht abgebaut werden gehören Antiphlogistika wie Diclofenac und Ibuprofen, Östradiole und zahlreiche Antibiotika sowie weitere endokrin wirksame Substanzen wie Nonylphenol oder Bisphenol-A. Es wurde auch beobachtet, dass der Eintrag von Antibiotika oder Antiphlogistika die Reinigungsleistung insgesamt negativ beeinflussen kann.

Auch in Industrieabwässern sind häufig Substanzen anzutreffen, deren Entfernung weder mit herkömmlichen Verfahren noch mit den bisher bekannten AOP (advanced oxidation processfortschrittliche Oxidationsverfahren) in befriedigender Weise gelingt. Hierzu gehören z.B. Nitroaromaten, halogenierte Kohlenwasserstoffe, Verbindungen aus der Klasse der Heterocyclen, komplexe Cyanide, eiweiß- und stärkehaltige Abwässer sowie bestimmte radioaktive Abfälle.

Die Behandlung von Wässern und Abwässern zum Abbau von Verunreinigungen mittels Elektrolyse ist weithin bekannt. Oftmals werden anorganische Substanzen in den Abwässern beispielsweise reduziert und auf diesem Wege entfernt. Auch die Elektrokoagulation zur Entfernung organischer Substanzen (Mineralöle) ist bekannt. Seit einer Reihe von Jahren finden sich in der Literatur vermehrt Informationen zur elektrochemischen Oxidation pharmazeutischer Wirkstoffe.

Patentschrift JP2003/105590 offenbart eine Elektrode einer Elektrolysevorrichtung, die durch einen Aktor in Schwingung versetzt werden kann.

In DE102011012832A1 wird ein Verfahren zur Behandlung von Prozess- und Trinkwasser offenbart, unter Verwendung einer Vorrichtung, umfassend einer Kathode und eine als Membran ausgebildete Anode. Durch Elektrolyse wird Wasser in die Elemente Sauerstoff und Wasserstoff zerlegt. In Nebenreaktionen bilden sich auch die desinfizierend wirkenden Substanzen Ozon (Os) und OH-Radikale an der Anode und Wasserstoffperoxid (H₂O₂) an der Kathode. Zusätzlich werden durch Umwandlung, der nativ im Trinkwasser enthaltenen ChloridIonen (CI⁻) in unterchlorige Säure (HOCI) bzw. Hypochlorit-Ionen (CIO⁻), desinfizierend wirkende Komponenten erzeugt.

Die elektrolytische Zersetzung von organischen Substanzen in Abwässern ist hingegen weniger verbreitet.

Bekannt ist die elektrolytische Totaloxidation organischer Verbindungen in wässrigen Lösungen, wobei Wasser zunächst elektrochemisch in Sauerstoff bzw. Sauerstoffradikale gespalten wird. Auch die Bildung von Hydroxidradikalen trägt zum Abbau der organischen Verbindungen bei.
(i)

   2 H₂O → O₂ + 4 H⁺ + 4 e⁻
(ii)

   H₂O → O· + 2 H⁺ + 2 e⁻
(iii)

   H₂O → OH· + H⁺ + e⁻

Gleichzeitig kann auch eine Rekombination an Hydroxidradikalen zu Wasserstoffperoxid erfolgen, welches wiederum als starkes Oxidationsmittel wirkt.

Die auf diesem Wege generierten reaktiven Sauerstoffspezies dienen dann der Oxidation der organischen Verbindungen, beispielsweise zu CO₂, welches dann aus dem Wasser entweicht oder in Form von Hydrogencarbonat gelöst werden kann.

Die letzten Jahre zeigen eine deutliche Zunahme von Angaben zu. fortschrittlichen Oxidationsprozessen (AOPs - Advanced Oxidation Processes) für die Zerstörung von REACH-relevanten Substanzen.

In einem Review-Artikel von Sires et.al. zu AOP's werden die Vor- und Nachteile der unterschiedlichen Prozessvarianten zusammenfassend beschrieben. Für klassische elektrochemische Verfahren werden zu hohe Kosten und Elektrodenfouling als wesentliche Nachteile beschrieben, wenngleich sich meist überlegene Umsatzraten erzielen lassen.

Chelliapan und Sallis verglichen die Wirksamkeit verschiedener AOPs und deren Kombinationen miteinander (Ozonung, Wasserstoffperoxid, UV-Behandlung, Fenton-Prozess). Sie stellten dabei fest, dass mittels der Kombination Ozonung/Wasserstoffperoxidzugabe und UV Behandlung mit einem Umsatz von 59% des Chemischen Sauerstoffbedarfs der höchste Effekt erzielt werden kann.

Nachteilig sind diese Verfahren sehr kostenintensiv. Zudem wurden in Zusammenhang mit der UV-Behandlung und der Ozonung von mehreren Autoren über die Bildung von Intermediaten und Reaktionsprodukten berichtet, die noch toxischer als der Ausgangsstoff waren.

Del Moro et.al. berichten über die relativ erfolgreiche elektrochemische Zerstörung jodierter Röntgenkontrastmittel, problematisch sind aber die benötigten Verweilzeiten und ein hoher Energieverbrauch.

EP 1 002 766 A2 beschreibt ein Verfahren zum elektrochemischen Abbau von organischen Verbindungen in einem wässrigen Anolyten, der Salpetersäure und Silberionen enthalten muss. Außerdem wird ein Katholyt eingesetzt, der ebenfalls Schwefelsäure oder Salpetersäure enthält. Durch Anlegen eines Potentials werden infolge einer elektrochemischen Überführung durch eine Membran hindurchtretenden Silberionen auf der Kathode als metallisches Silber abgeschieden, welches dann in Intervallen entfernt wird.

Die organischen Verbindungen im wässrigen Anolyten werden dabei oxidativ zersetzt.

Aus der EP 0 297 738 A1 ist ein Verfahren zur elektrochemischen Oxidation von organischen Verbindungen bekannt. Bei diesem Verfahren wird eine ringförmig geschlossene Elektrolysezelle verwendet, die aus zwei senkrechten Teilstücken und zwei waagerechten Verbindungsstücken besteht. In eines der senkrechten Teilstücke taucht eine rohrförmige Anode ein, in deren Innenraum ein rohrförmiger poröser Separator eingesetzt ist, der an seinem unteren Ende abgeschlossen ist. Der Separator kann beispielsweise aus einer lonenaustauschermembran aus sulfoniertem Fluorpolymer ("Nafion") bestehen. Im Innenraum dieses Separators ist eine zylinderförmige Kathode eingesetzt. Die elektrochemische Oxidation der organischen Verbindungen verläuft indirekt über Silbersalze als Oxidationsmediatoren. Bei Temperaturen oberhalb von 50°C können die organischen Verbindungen in einer salpetersäurehaltigen Lösung mit Hilfe von anodisch gebildeten Silber-II-Ionen vollständig bis zum Kohlendioxid aufoxidiert werden. Bei diesem Verfahren muss kathodisch eine mindestens 7-molare Salpetersäurelösung eingesetzt werden. Nur bei dieser hohen Salpetersäurekonzentration ist es möglich, die durch den Separator zur Kathode überführten Silberionen in Lösung zu halten.

Nachteilig werden bei diesen Verfahren hohe Mengen an Säure eingesetzt und ein apparatetechnisch hoher Aufwand betrieben, welchen es zu überwinden gilt.

Die Elektrolyse zur Beseitigung von Verunreinigungen in Flüssigkeiten ist ein diffusionskontrollierter Prozess. Durch oxidative Zersetzung der verunreinigenden Verbindungen an der Anode kommt es zu einem Konzentrationsgefälle dieser Verbindung vom Elektrolyten zur Phasengrenze an der Oberfläche der Anode, welches durch Diffusion und Migration weiterer Verbindungen in Richtung Anode ausgeglichen wird.

Auch bei elektrochemischen Synthesen besteht häufig das Problem, dass die Stofftransportverhältnisse zu einer Limitierung der Umsetzungsgeschwindigkeit führen oder das Intermediate und Reaktionsprodukte auf der Elektrodenoberfläche adsorbiert werden und sie auf diese Weise die Reaktionsgeschwindigkeit erniedrigen. Die Umsetzung dispergierter Substanzen (Slurries, mizellare Stoffe, Nanopartikel) gelingt nur mit besonderen Vorkehrungen in befriedigender Weise.

Um solche Elektrolysen effizienter zu gestalten bedarf es der Intensivierung dieser diffusionskontrollierten Reaktion sowie die Verhinderung von Reaktionen, durch die irreversiblen Adsorptions- und Scalingprozesse zur Beeinträchtigung der Effizienz führen.

Zur Intensivierung der Stofftransportprozesse bedient man sich nach dem Stand der Technik verschiedener Maßnahmen. Dies sind beispielsweise die Erhöhung der Überströmgeschwindigkeit an der Elektrodenoberfläche, der Einsatz von Turbulenzpromotoren, den Einsatz bewegter Elektroden, Gasblasenrührung oder ein spezielles Reaktordesign, wie die swiss roll-cell oder Schüttbettreaktoren mit keilförmigen Querschnitt in Strömungsrichtung (Kreysa-Zelle).

Auch Elektroden mit stark poröser Oberfläche wie Schäume werden als hierfür vorteilhaft geeignete Elektrodenmaterialien angegeben. Alle diese Lösungsvorschläge weisen jedoch teils erhebliche Nachteile auf.

So führt die Erhöhung der Überströmgeschwindigkeit zu höherem hydraulischem Widerstand in der Elektrolysezelle. Zudem nimmt die Grenzschichtdicke in Durchströmungsrichtung dennoch zu, sodass der Effekt mit zunehmender Länge des Strömungspfades verloren geht. Turbulenzpromotoren erhöhen ebenfalls den hydraulischen Widerstand, begünstigen sog. Clogging und wirken ebenso kaum auf die Grenzschicht auf der Elektrodenoberfläche.

Der Einsatz bewegter Elektroden erfordert spezielle, aufwändige Zellenkonstruktionen und ist daher auf wenige spezielle Anwendungen, wie die Schüttgut- oder Trommelgalvanik beschränkt. Die Glasblasenrührung ist zwar effizient, zugleich aber auf Reaktionssysteme beschränkt, bei denen starke Gasentwicklung erwünscht ist. Die künstliche Erzeugung solchen Rühreffektes ist wegen der Überspannungscharakteristik der üblichen Gasentwicklungsreaktionen mit hohem energetischen Aufwand verbunden.

Im Falle eines Foulings oder Scalings auf der Elektrodenoberfläche erweisen sich bislang meist nur aufwendige chemische, mechanische oder thermische Regenerationsverfahren als wirksam, von denen letztere eine Demontage der Elektrolysezelle erfordern.

Ein weiterer möglicher Ansatz zur Effizienzsteigerung von Elektrolysen ist die Kombination von Elektrolysezelle und Ultraschallvorrichtung, auch als Sono-Elektrochemie bezeichnet.

So beschreiben WoMag - Kompetenz in Werkstoff und funktioneller Oberfläche, 10/ 2016, S. 18 - 20 die elektrolytische Abscheidung von Nickel-Schwefeldispersionen, wobei eine Sonotrode in die Elektrolysezelle eingebracht wird, um eine gleichmäßigere Partikelverteilung zu ermöglichen. Höhere Abscheidungsraten und effizientere Umsetzung der Verbindungen sind dadurch möglich.

Gleichzeitig ist auch bekannt, dass große Moleküle mittels Ultraschall gespalten werden können.

Schmid et al. beschrieben schon 1944 den Abbau von linearen Makromolekülen mittels Ultraschall (siehe Schmid, Beulienmüller, Zeitschrift für Elektrochemie und angewandte physikalische Chemie, Bd. 50, 9/10 1944, S. 209 - 240)
Der Einsatz von Sonotroden zur Effizienzsteigerung der Elektrolyse ist ebenfalls bekannt aus WO002004069437A1. Beschrieben wird dort ein Verfahren zum Entfernen von vernetzten Polymeren aus Metallstrukturen wobei die Metallstruktur in ein Bad einer konzentrierten Säure eingebracht wird und anschließend unter Einwirkung von Megaschall entfernt wird. In einer Ausführungsform wird die Metallstruktur gleichzeitig in einem Elektrolyseverfahren als Kathode geschaltet, sodass die Entfernung und Zersetzung der Polymere effizienter erfolgt.

DE000003920601A1 offenbart ein Verfahren zum Behandeln von Natrium-Nitrat haltigen Elektrolyten beim elektrochemischen Abtragen der Oberflächen metallischer Werkstücke, wobei beim Abtragsprozess sich bildendes Nitrit durch Zusetzen von Ozon zu Nitrat oxidiert wird. In dem Elektrolyten gelöstes Ozon wird mittels Ultraschall wieder separiert. Die Vorrichtung zur Durchführung des Verfahrens ist gebildet durch eine Sonotrode als Ultraschallquelle, die in einen in den Elektrolytkreislauf eingeschalteten Entgasungsbehälter hineinragt.

DE000019928174A1 offenbart ein Verfahren zur Durchführung von nasschemischen Prozessen mit verringertem Messzellenvolumen, wobei die analytische Empfindlichkeit erhöht werden soll. Dies geschieht unter anderem durch Einsatz von Ultraschallfeldern. Die Apparatur dazu beinhaltet ein elektrochemisches Elektrodensystem und eine Ultraschallquelle. Unter dem gezielten Einsatz eines Ultraschallfeldes kommt es zur besseren Durchmischung der Messzellenflüssigkeit und zur Verminderung von Diffusions- und Grenzschichten an den Elektroden.

DE102007051230A1 betrifft einen Elektrolysator zum Erzeugen von Wasserstoff und Sauerstoff mit einem Elektrolysezellenblock mit einer Anode und einer Kathode. Dabei ist der Elektrolysezellenblock mit separaten Entgasungsbehältern für Wasserstoff und Sauerstoff verbunden und die im Elektrolysezellenblock angeordneten Elektroden sind über Anschlussleitungen mit Ultraschallgeneratoren gekoppelt.

Zu den herausragenden Effekten des Einbringens von Ultraschallschwingungen in eine Elektrolysezelle gehören eine Vervielfachung der Grenzstromdichte, eine Regeneration freier Elektrodenoberfläche durch Kavitationseffekte und Jets, Änderungen im Reaktionsmechanismus bei komplexeren Reaktionen, die verbesserte Dispergierung von Gasen und schlecht löslichen Reaktionsprodukten im Elektrolyten und die sonochemische Anregung reaktionsträger Spezies.

Nachteilig an den herkömmlichen Verfahren ist, dass dabei stets das Ultraschallhorn der Elektrode direkt gegenüber liegt oder als Bauteil in die Elektrolytlösung eintaucht oder sich die Anordnung in einem Ultraschallbad befindet. Auch über die direkte US-Anregung von Elektroden ("Sonotrode") wurde in der Literatur berichtet. Die genutzte Anordnung scheint für einen größeren technischen Einsatz wenig geeignet. Walton berichtet in einer umfangreicheren Übersicht über ein breiteres Feld elektrosynthetischer Anwendungen. Genannt werden die Reduktion von Ketonen, die Elektrooxidation substituierter Benzene, von Carboxylaten, von Phenylacetat, Ultraschall- unterstützte Kolbesynthesen, die Erzeugung von Polypyrrol, die Reduktion pharmazeutischer Wirkstoffe wie von Diazepamderivaten. Mit Ultraschallunterstützung werden auch Elektrosynthesen in z.T. tiefkalten Lösungsmitteln bei niedriger Leitfähigkeit mit guter Ausbeute möglich. Einer Publikation der UniversitätAlicante ist zu entnehmen, dass Wässer, die Stoffe wie Tetrachlorkohlenstoff, Jodoform, weitere LHKW, Pyridin, organische Amine, Cyanide und Nitrile, Phenole und Tenside erfolgreich sonoelektrochemisch behandelt werden können. Bei der Umsetzung von Diclofenac hat sich die sono-elektrochemische Behandlung ebenfalls als wirksamer als andere Verfahren erwiesen.

EP 2389460B1 offenbart eine Elektrolysezelle für die Herstellung von Gasen. Dabei wird auf eine Elektrode aus Stahlblech über einen isolierenden Klebstoff ein Piezoelement aufgebracht, enthaltend eine Piezokeramik Scheibe mit einem zentral angeordneten elektrischen Kontakt und einem äußeren Ring aus Messing. Daran ist ein zweiter elektrischer Kontakt angebracht. Durch Anlegen einer Wechselspannung zwischen den elektrischen Kontakten können Schwingungen des Piezoelements hervorgerufen werden, welche die gesamte Elektrode zum Schwingen bringen können. Über chemisch resistente Kabel verläuft eine Verbindung von Piezoelement zu einem Steuerelement, wodurch das Piezoelement mit einer Resonanzfrequenz angeregt werden kann. Die bei der Zersetzung von Wasser gebildeten Gase können so effizienter von der Elektrodenoberfläche entfernt werden.

Die Verwendung von Klebstoffen zur Befestigung der Piezokeramik ist nachteilig, insbesondere, weil die bekannten Klebstoffe unter stark oxidierenden Bedingungen nicht hinreichend beständig sind.

US 2011 0114496 A1 - offenbart Elektroden, insbesondere in Brennstoffzellen mit einer besonders großen Oberfläche, um die dort ablaufenden Reaktionen effizienter zu gestalten. Dies findet Anwendung beispielsweise bei der Zersetzung von Wasser in Sauerstoff und Wasserstoff, oder bei der Erzeugung von Elektrizität durch die Reaktion eines Brennstoffs (beispielsweise H2) und eines Oxidationsmittels (bspw. Luftsauerstoff). Das Elektrodensubstrat besteht aus einem Metall oder einer Legierung und ist mit einer Multiphasen Lage beschichtet. Dies ist eine Metallschicht oder Metallmatrix, enthaltend Übergangsmetalle. In die Metallmatrix sind wiederum Partikel eingearbeitet, welche aus katalytisch wirksamen Metallen bestehen.

In einer Ausführungsform wird u.a. auch der Einsatz eines Vibrationsmotors beschrieben, der die Elektroden in Schwingung versetzen soll. Die Vibrationsfrequenzen reichen dabei von 1 Hz bis in den Ultraschallbereich. Durch die Vibrationen werden höhere Raten bei der Elektrolyse oder Generierung von Elektrizität erreicht.

Die Elektrolysezellen können dabei einen oder mehrere Vibratoren aufweisen, wobei einer im Ultraschallbereich operiert. Diese Vibratoren können direkt oder indirekt an eine oder alle Elektroden angebracht werden und kontinuierlich oder periodisch arbeiten, um Blasen von der Oberfläche der Elektrode zu lösen.

Ein Vibrator kann u.a. ein elektromechanischer Wandler, wie bspw. ein Piezoelektrisches Element sein und kann in der Kammer oder direkt an der Elektrode, beispielsweise über einen Isolator, am elektrischen Anschluss angebracht werden.

In US 2014/0001035 A1 wird eine zylinderförmige Elektrolysezelle beschrieben, welche primär als Brennstoffzelle Anwendung findet. Im Zentrum des Zylinders ist dabei eine stabförmige positive Elektrode angeordnet, welche von einer negativen Elektrode umgeben wird, wobei ein Zwischenraum gebildet wird, der wiederum mittels Zellmembran in zwei Kompartimente geteilt wird. In diese Kompartimente kann die jeweilige Elektrolytlösung gefüllt und behandelt werden. Während der Elektrolyse von Wasser bilden sich an der Oberfläche der Elektroden Gasbläschen aus Sauerstoff bzw. Wasserstoff, welche für einen effizienten Prozess möglichst schnell wieder von der Oberfläche gelöst werden sollen. Zudem wird durch die Oszillation eine Erniedrigung der Zellspannung bewirkt und längere Stillstandszeiten vermieden.

Dazu werden beispielsweise Wandler an die Elektroden oder innen oder außen an das Gehäuse der Elektrolysezelle angebracht, welche die Elektroden in Schwingungen versetzen und einen effizienteren Abtransport der Gasbläschen ermöglichen. Die Wandler werden mit Leiter oder Draht befestigt. Es erfolgt eine Relativbewegung der Elektroden als Ganzes. Beide Elektroden können in verschiedene Richtungen schwingen. Das Schwingungsmuster kann durch einen Prozessor kontrolliert werden.

Del Campo et.al. wiesen in ihren Untersuchungen nach, wie wichtig die Gleichmäßigkeit und die Ausrichtung des Ultraschallfeldes in Bezug zur Elektrodenoberfläche für den Reaktionsablauf und mechanische Integrität des Elektrodenmaterials sind.

In dieser Hinsicht ist die übliche Konfiguration mit einem über (vor) der Elektrodenoberfläche platzierten Ultraschallhorn sehr ungünstig. Verantwortlich sind Abschirmeffekte, eine ungleichmäßige Feldstärkeverteilung und relativ große Elektrodenabstände. Dies ist jedoch von sehr großem Nachteil, wenn bei hohen geforderten Volumendurchsätzen Wässer und Prozesslösungen mit geringer elektrischer Leitfähigkeit elektrochemisch behandelt werden sollen. Die geringe elektrische Leitfähigkeit würde für eine effiziente Behandlung einen geringeren Abstand der Elektroden benötigen. Durch den zwischen den Elektroden angeordneten Ultraschallwandler ist ein geringerer Abstand jedoch nicht möglich.

Bei Arbeiten im labortechnischen Maßstab kommen bislang vorzugsweise angepasste Glasreaktoren mit mehreren 100 Kubikzentimeter Volumen zum Einsatz. Die erforderlichen Elektroden werden als eingehängte metallische Formkörper eingebracht. Die zur Aktivierung notwendige Ultraschallenergie wird über eingehängte Sonotroden eingebracht.

Die Kombination Sonochemie/Ozonung wurde ebenfalls bereits getestet. Trotz einer klaren Verbesserung des Umsetzungsgrades bei der Oxidation von Diclofenac im Vergleich zur alleinigen Ozonbehandlung wurden im Vergleich zur sono-elektrochemischen Behandlung vergleichsweise niedrige Umsätze erzielt.

Eine reduktive Behandlung der Abwässer ist hingegen selten, obwohl auch auf diese Weise reduzierbare REACH-Stoffe effizient transformiert und damit einem biologischen Abbau zugänglich gemacht werden könnten.

Aufgabe der Erfindung die Bereitstellung einer Vorrichtung, die eine effiziente sono-elektrochemische Behandlung zur elektrochemischen und mechanische Zersetzung von Verbindungen insbesondere auch in stark verdünnten Elektrolyten ermöglicht.

Die Aufgabe wird gelöst durch eine Elektrode, aufweisend mindestens einen Schwingungserzeuger (8) und ein Trägersubstrat (5) mit einer Trägerseite (6) und einer elektrochemisch aktiven Seite (4) mit einer elektrochemisch aktiven Schicht (7), wobei die elektrochemisch aktive Schicht mittels Anschlusspad (9) von der Trägerseite aus über elektrisch leitende Verbindungen (10) mit einer ersten Spannungsquelle (2) kontaktiert ist,oder wobei die elektrochemisch aktive Schicht über seitlich herausgeführte Kontakte direkt mit der ersten Spannungsquelle (2) verbunden ist,
wobei der mindestens eine Schwingungserzeuger auf der Trägerseite (6) auf das Trägersubstrat (5) aufgebracht oder in die Oberfläche des Trägersubstrats eingebettet ist, wobei der Schwingungserzeuger (8) mit der ersten Spannungsquelle (2) oder einer weiteren Spannungsquelle (11) elektrisch kontaktiert ist,
wobei das Trägersubstrat (5) teilweise oder vollständig aus einem keramischen Material und/oder mindestens einem Ventilmetall aufgebaut ist oder eine keramisches Material und/oder mindestens ein Ventilmetall umfasst.

In einer Ausführungsform handelt es sich um eine Elektrode, aufweisend ein Trägersubstrat (5) mit einer Trägerseite (6) und einer elektrochemisch aktiven Seite (4) mit einer elektrochemisch aktiven Schicht (7),
- wobei die elektrochemisch aktive Schicht, mittels Anschlusspad (9), von der Trägerseite aus über elektrisch leitende Verbindungen (10) mit einer ersten Spannungsquelle (2) kontaktiert ist,
- wobei die Trägerseite mindestens einen Schwingungserzeuger (8) aufweist
- wobei der Schwingungserzeuger mit der ersten Spannungsquelle (2) oder einer weiteren Spannungsquelle (11) elektrisch kontaktiert ist.

In einer Ausführungsform besteht die Elektrode aus einem Materialverbundsystem.

Erfindungsgemäß weist die Elektrode, ein Trägersubstrat (5) mit einer Trägerseite (6) und einer elektrochemisch aktiven Seite mit einer elektrochemisch aktiven Schicht (7) und mindestens einen, mit einer Spannungsquelle (2) oder einer weiteren Spannungsquelle (11) elektrisch kontaktierten Schwingungserzeuger (8) auf.

Die Elektrode umfasst also ein Trägersubstrat, enthaltend ein Trägermaterial, mit einer Trägerseite. Auf dem Trägersubstrat ist, der Trägerseite abgewandt, eine elektrochemische Aktivschicht aufgebracht. Diese bildet die elektrochemisch aktive Seite der Elektrode.

Erfindungsgemäß ist der mindestens ein Schwingungserzeuger auf der Trägerseite auf das Trägersubstrat aufgebracht und/oder in die Oberfläche des Trägersubstrats eingebettet.

Vorteilhaft muss das Schwingungselement durch das Anbringen auf der Trägerseite bzw. durch die Einbettung in das Trägersubstrat nicht abgedeckt oder abgedichtet werden und so vor elektrochemischer Zerstörung geschützt werden.

In einer Ausführungsform ist die Trägerseite ebenflächig. In einer Ausführungsform ist der mindestens eine Schwingungserzeuger über eine Verbindung, beispielsweise eine Lötstelle oder mittels thermochemischer Behandlung, auf die Trägerseite befestigt.

In einer Ausführungsform ist der mindestens eine Schwingungserzeuger in Form von Funktionsschichten auf die Oberfläche der Trägerseite aufgebracht oder in die Oberfläche eingebettet.

In einer Ausführungsform enthält die Trägerseite mindestens eine Vertiefung, in die der mindestens eine Schwingungserzeuger eingebettet ist.

In einer Ausführungsform ist die Tiefe der Vertiefung 0,1 bis 3 mm, bevorzugt 0,2 bis 2 mm, insbesondere 0,5 bis 1 mm.

In einer Ausführungsform enthält die Trägerseite mehrere Schwingungserzeuger. Dann können alle Schwingungserzeuger aufgebracht oder alle Schwingungserzeuger eingebettet oder einige Schwingungserzeuger aufgebracht und einige eingebettet sein.

Der oder die Schwingungserzeuger sind so aufgebracht und/oder eingebettet, dass sie von der elektrochemischen Aktivschicht isoliert sind.

In einer Ausführungsform ist der Schwingungserzeuger ein akustischer Schwingungserzeuger.

In einer Ausführungsform ist der mindestens eine Schwingungserzeuger ein Piezoaktor, auch Piezoelement genannt.

In einer Ausführungsform umfasst der Piezoaktor eine Grundelektrode (12), eine Deckelektrode (13) und eine dazwischen angeordnete Piezoschicht oder piezoelektrische Schicht (14).

In einer Ausführungsform sind Grundelektrode, piezoelektrische Schicht und Deckelektrode stapelartig oder in Form von Funktionsschichten angeordnet, wobei sich die piezoelektrische Dickschicht zwischen Grund- und Deckelektrode befindet.

In einer Ausführungsform enthält die piezoelektrische Schicht eine piezoelektrische Keramik.

In einer Ausführungsform ist die piezoelektrische Keramik ein ferroelektrisches Material, beispielsweise PZT (Blei-Zirkonat-Titanat)
In einer Ausführungsform ist die piezoelektrische Schicht eine PZT Dickschicht, wie beispielsweise beschrieben in der Publikation von Gebhardt et al. (S. Gebhardt, A. Schönecker, C. Bruchmann, ACTUATOR 2010, 12th International Conference on New Actuators, Bremen, Germany, 14 - 16 June 2010)

In einer Ausführungsform ist die PZT Schicht über eine PZT -Dickschichttechnik, beispielsweise mittels Siebdruck hergestellt.

Vorteilhaft weist die PZT-Dickschicht sehr hohe Zyklenfestigkeit und sehr gute mechanische Substratankopplung auf. Grund dafür ist die Art der Herstellung der PZT Dickschicht. Diese wird als Paste auf das Substrat gedruckt oder aufgebracht. In der Paste befindet sich ein Glaspulver. Die Paste wird nach dem Aufbringen thermisch behandelt. Das Glaspulver schmilzt während des Einbrennens, benetzt die Substratoberfläche unter der Paste und stellt eine Haftung zwischen den weiteren Pastenbestandteilen (z.B. PZT Pulver) und dem Substrat beispielsweise der Grundelektrode her.

Der Schwingungserzeuger bzw. die Elektroden des Schwingungserzeugers (12) und (13), beispielsweise Piezoaktors, sind erfindungsgemäß mit einer Spannungsquelle (2), beispielsweise in einer Elektrolysezelle oder mit einer weiteren Spannungsquelle (11) elektrisch kontaktiert.

In einer Ausführungsform ist die mit dem mindestens einen Schwingungserzeuger elektrisch verbundene Spannungsquelle, beispielsweise (11), eine Wechselspannungsquelle oder eine gepulste Spannungsquelle.

In einer Ausführungsform ist die mit dem Schwingungserzeuger (8) elektrisch verbundene Spannungsquelle geeignet, eine gepulste Gleichspannung abzugeben.

Durch Anlegen einer Wechselspannung oder gepulsten Gleichspannung an den Schwingungserzeuger wird dieser zum Schwingen gebracht.

In einer Ausführungsform, wenn der Schwingungserzeuger ein Piezoschwinger mit Grundelektrode, Deckelektrode und Piezoschicht ist, werden durch Anlegen einer Spannung die Ladungen in der Piezoschicht verschoben, was zu einem Zusammenziehen oder Ausdehnen in Spannungsrichtung führt. Durch das regelmäßige Umkehren der elektrischen Polarität der angelegten Spannung kann die Piezoschicht also in Schwingung versetzt werden. Diese Schwingungen übertragen sich auf das Trägersubstrat, welches dadurch ebenfalls schwingt.

Die anzulegende Maximalspannung hängt von der Dicke der Piezokristallscheibe, vom Material und von den Isoliereigenschaften zwischen den Elektroden ab. Bei einer Schichtdicke des Piezomaterials von 0,1 mm kann man eine Spannung von 0,01 bis 50V, bevorzugt bis 25 V, anlegen. Die maximale Auslenkung beträgt ungefähr 0,1 bis 0,5%, bevorzugt maximal 0,2 % der Schichtdicke der Piezoschicht.

In einer Ausführungsform beträgt die Resonanzfrequenz des Piezowandlers 2 kHz bis 25 MHz.

In einer Ausführungsform ist das Trägersubstrat ein flacher Quader oder ein Blech oder eine Folie mit einer Ober- und einer Unterseite bzw. einer ersten und einer zweiten Seite, welche sich gegenüberliegen.

In einer Ausführungsform ist das Trägersubstrat röhrenförmig, wobei die Grundfläche der Röhre verschiedene geometrische Formen haben kann. Dann entspricht dieAußenseite der Röhre oder des Zylinders der Trägerseite des Trägersubstrats und die Innenseite der Röhre entspricht der elektrochemisch aktiven Seite des Trägersubstrats. Im Zentrum der Röhre kann dann eine zweite Elektrode bzw. Gegenelektrode angeordnet werden, welche beispielsweise als Stab ausgebildet sein kann. Der mindestens eine Schwingungserzeuger ist auf der Trägerseite aufgebracht und/oder in sie eingebettet. So kann das Trägersubstrat kontrolliert in Schwingungen versetzt werden, ohne dass Risse oder Defekte im Trägersubstrat entstehen.

In einer Ausführungsform enthält die Trägerseite mehrere Schwingungserzeuger (8). In einer Ausführungsform ist die Grundfläche der Summe aller Schwingungserzeuger 0,1 bis kleiner 50% der Gesamtfläche der Trägerseite.

In einer Ausführungsform sind die Schwingungserzeuger (8) in regelmäßigen Abständen auf der Trägerseite angeordnet.

Die Schwingungen haben im Resonanzfall bestimmte Schwingformen - sogenannte Moden. Die Position der Schwingungserzeuger richtet sich nach der Gestalt der gewünschten Mode. Wird zum Beispiel nur ein Schwinger platziert und das in die Mitte der Trägerseite, dann ist die Dichte der Moden dort am größten.

Die Anordnung der Schwinger auf der Trägerseite ist abhängig von der Art der Flächenschwingung, die erzeugt werden soll. Vorteilhaft ist über die Anordnung der Schwingungserzeuger auf der Trägerseite die Art der Flächenschwingung, welche die Elektrode erzeugen soll, einstellbar.

In einer weiteren Ausführungsform sind die Schwingungserzeuger im Zentrum der Trägerseite dichter als im Randbereich der Trägerseite angeordnet.

Prinzipiell ist die Anordnung der Schwingungserzeuger abhängig vom Material des Trägersubstrats, von dessen Größe, Elastizität und Dicke und von der Größe und Beschaffenheit der Schwingungserzeuger.

In einer Ausführungsform sind mindestens zwei der Schwingungserzeuger über eine Parallelschaltung mit einer Spannungsquelle (2) oder der weiteren Spannungsquelle (11) elektrisch kontaktiert.

In einer weiteren Ausführungsform ist ein dritter Schwingungserzeuger mit einer weiteren Spannungsquelle, verschieden von der Spannungsquelle der parallel geschalteten mindestens zwei Schwingungserzeuger, elektrisch kontaktiert.

In einer Ausführungsform sind mindestens zwei der Schwingungserzeuger mit zwei voneinander getrennten Spannungsquellen elektrisch verbunden.

Durch das Anlegen einer elektrischen Spannung an die mit dem mindestens einen Schwingungserzeuger verbundene Spannungsquelle, werden vom Schwingungserzeuger mechanische Schwingungen auf das Trägersubstrat und damit auf die Elektrode übertragen. Diese wird damit ebenfalls in mechanische Schwingungen versetzt.

Dies kann in einer Ausführungsform über das Anlegen einer Wechselspannung, bevorzugt mit einer Frequenz von 2 kHz bis 25 MHz, erfolgen. In einer weiteren Ausführungsform geht von der Spannungsquelle ein gepulster Gleichstrom, bevorzugt mit 500 bis 5000, insbesondere 700 bis 1500 Pulswiederholungen pro Sekunde, aus, welcher den Schwingungserzeuger ebenfalls in mechanische Schwingungen versetzt.

In einer Ausführungsform beträgt die Spannung, die an den Schwingungserzeuger angelegt wird, 1 bis 30 V, bevorzugt 5 bis 25 V.

In einer Ausführungsform beträgt die Schwingungsfrequenz eines Schwingungserzeugers 2 kHz bis 25 MHz.

Vorteilhaft können somit an die Schwingungserzeuger verschiedene Spannungssignale angelegt und damit verschiedene Schwingungsfrequenzen ermöglicht werden. Damit können wiederum an den Elektrodenaufbau angepasste Schwingungsmuster der Elektrode realisiert werden.

Erfindungsgemäß ist die elektrochemische Aktivschicht von der Trägerseite aus, über elektrisch leitende Verbindungen mit der Spannungsquelle (2) kontaktiert oder über seitlich herausgeführte Kontakte direkt mit der Spannungsquelle (2) verbunden.

In einer Ausführungsform ist die elektrochemische Aktivschicht über elektrisch leitende Verbindungen mit einer auf der Trägerseite aufgebrachten oder in das Trägermaterial integrierten Kontaktelektrode oder Anschlusspad kontaktiert, welche wiederum mit der Spannungsquelle (2) elektrisch verbunden ist.

Über das Anschlusspad oderdie Kontaktelektrode kann an der elektrochemischen Aktivschicht eine Spannung angelegt werden, um beispielsweise als erste (oder zweite) Elektrode in einem Elektrodenpaar in einer Elektrolysezelle eingesetzt zu werden. Die Kontaktelektrode ist mit einer Spannungsquelle (2) elektrisch verbunden, mit welcher auch die Gegenelektrode im Elektrodenpaar verbunden ist.

In einer Ausführungsform sind die elektrisch leitenden Verbindungen Durchkontaktierungen, auch Vias genannt. Diese führen von der Kontaktierung auf der Trägerseite (Anschlusspad) zur elektrochemisch aktiven Schicht.

Weiterhin kann die Kontaktierung der elektrochemisch aktiven Schicht erfindungsgemäß nicht von der Trägerseite aus, sondern über seitlich herausgeführte Kontakte, welche direkt von der elektrochemisch aktiven Schicht abgehen, erfolgen, wobei die Kontakte mit der ersten Spannungsquelle (2) verbunden sind.

Befindet sich die Elektrode in einer Elektrolysezelle, so kann die elektrochemisch aktive Schicht beispielsweise durch eine in die Zelle integrierte Kontaktvorrichtung mit der ersten Spannungsquelle (2) verbunden sein.

In einer Ausführungsform enthält die elektrochemische Aktivschicht ein elektrisch leitendes Material.

Vorteilhaft kann mit der Wahl des Materials der elektrochemisch aktiven Schicht bestimmt werden, ob eine Elektrode des Elektrodenpaares als Anode oder Kathode geschalten werden soll. Ebenso bestimmt die Wahl des Materials der Gegenelektrode deren Funktbn im Betriebsfall.

In einer Ausführungsform ist die erfindungsgemäße Elektrode als Anode vorgesehen. Dann ist das elektrisch leitende Material der elektrochemischen Aktivschicht ein Anodenmaterial. In einer Ausführungsform ist das elektrisch leitenden Material ausgewählt aus ausgewählt aus Metallen, ausgewählt aus den Gruppen III, IV, IVb, Vb, Vlb, Vllb und Vlllb des Periodischen Systems der Elemente und deren Legierungen untereinander, oxidische Verbindungen der o.g. Metalle und um gemischte Oxide der vorgenannten Metalle. In einer Ausführungsform ist das elektrisch leitende Material ausgewählt aus Platin, Gold, Graphen, Graphit, Sb(III/V)oxid-dotiertes Sn(IV)oxid, Bi(III/V)oxid-dotiertes Sn(IV)oxid, IrO₂ Legierungen aus Pt-Rh, Pt/IrO₂ , PtO /Ta₂O₅, PtO/WO₃, PbO₂, SnO₂ / Sb₂O₃ / Bi₂O₃, oder Schichten der allgemeinen Struktur [(H₂O)L₄Sn-O-SbL₄(H₂O)]⁶⁺ (L = Cl⁻ oder NO₃⁻).

In einer Ausführungsform ist die erfindungsgemäße Elektrode als Kathode vorgesehen. Dann ist das Material der elektrochemischen Aktivschicht ein Kathodenmaterial, bevorzugt ausgewählt aus Metallen der Gruppe IVb, Vb, Vlb, Vlllb, Ib, Ilb, III, IV, des PSE und/oder deren Legierungen untereinander soweit sie unter den Einsatzbedingungen in festem Aggregatzustand vorliegen und/ oder Kohlenstoff und/ oder Silicide, Nitride und Carbide sowie Boride der vorgenannten chemischen Elemente, und/ oder unlegierten, legierten und hochlegierten Stählen, Nickel- und Cobaltbasislegierungen, und/ oder Kohlenstoffallotropen.

Erfindungsgemäß ist das Trägersubstrat vollständig oder teilweise aus keramischem Material und/oder mindestens einem Ventilmetall aufgebaut oder umfasst ein keramisches Material und/oder mindestens ein Ventilmetall.

In einer Ausführungsform besteht das Trägersubstrat aus einem keramischen Material.

In einer Ausführungsform besteht das Trägersubstrat aus einem nicht leitfähigen Material.

In einer Ausführungsform ist das Trägersubstrat mikroporös und kann so zugleich auch als semipermeable Membran dienen.

In einer Ausführungsform ist das keramische Material ausgewählt aus Aluminiumoxid, Aluminiumnitrid oder Niedertemperatur-Einbrand-Keramiken (Low Temperature Cofired Ceramics (LTCC).

In einer Ausführungsform ist das Trägersubstrat ein Verbundwerkstoff, enthaltend eine Keramik und/oder ein Polymer.

In einer Ausführungsform enthält das Trägersubstrat ein polymeres Material.

In einer Ausführungsform enthält das Trägersubstrat einen Verbundwerkstoff.

In einer Ausführungsform besteht das Trägersubstrat aus mindestens einem Ventilmetall.

Im Sinne der Erfindung ist ein Ventilmetall ein Metall, das durch anodische Oxidation eine Schicht aus Metalloxid bildet, die elektrisch nichtleitend ist.

Ventilmetalle sind von Natur aus wesentlich elastischer und haben eine wesentlich höhere Leitfähigkeit als Keramiken. Trägersubstrate, umfassend oder bestehend aus mindestens einem Ventilmetall sind damit stabiler gegenüber mechanischen Schwingungen.

In einer Ausführungsform ist das mindestens eine Ventilmetall ausgewählt aus Ti, Zr., Hf, Nb, Ta, Mo, W und / oder Mischungen oder Legierungen dieser.

Ist das Trägersubstrat aus mindestens einem Ventilmetall aufgebaut oder besteht aus mindestens einem Ventilmetall oder umfasst mindestens ein Ventilmetall, so ist in einer Ausführungsform zwischen Trägersubstrat und Schwingungselement eine elektrisch schlecht oder nicht leitende Zwischenschicht angeordnet.

In einer Ausführungsform ist die Zwischenschicht eine Schicht eines Oxids mindestens eines Ventilmetalls.

In einer Ausführungsform ist die Zwischenschicht eine Schicht, umfassend ein Metalloxid.

In einer Ausführungsform ist nur ein Teil der Oberfläche der Trägerseite mit Grundfläche des mindestens einen Schwingungserzeugers bedeckt.

Der Schwingungserzeuger kann beliebige geometrisch planare Formen aufweisen.

In einer Ausführungsform ist die Grundfläche des mindestens einen Schwingungserzeugers kreisförmig.

In einer Ausführungsform ist der Durchmesser der Grundfläche 2 bis 50 mm, bevorzugt 5 bis 20 mm, besonders bevorzugt 5 bis 15 mm.

In einer Ausführungsform beträgt die Grundfläche des mindestens einen Schwingungserzeugers 0,2 bis 2500 mm², bevorzugt 1 bis 1000 mm², besonders bevorzugt 10 bis 500 mm²

In einer Ausführungsform beträgt das Verhältnis der offenen Fläche der Trägerseite zur Fläche, die von dem mindestens einen Schwingungserzeuger belegt ist 20:1 bis, 1:2, bevorzugt 10:1 bis 1:1.

Gegenstand der Erfindung ist auch eine Elektrolysezelle enthaltend,
- mindestens ein Elektrodenpaar, umfassend eine erste Elektrode (3a) und eine zweite Elektrode (3b),
- wobei das Elektrodenpaar mit einer ersten Spannungsquelle (2) elektrisch leitend verbunden ist,
- wobei mindestens die erste Elektrode (3a) und/oder die zweite Elektrode (3b) des Elektrodenpaares eine Elektrode, umfassend ein Trägersubstrat (5) mit einer Trägerseite (6), aufweisend mindestens einen Schwingungserzeuger (8), und mit einer elektrochemisch aktiven Seite (4) mit einer elektrochemisch aktiven Schicht (7) ist,
- wobei die elektrochemisch aktive Schicht, mittels Anschlusspad oder Kontaktelektrode (9), von der Trägerseite aus über elektrisch leitende Verbindungen (10) mit der ersten Spannungsquelle (2) kontaktiert ist
- oder wobei die elektrochemisch aktive (7) Schicht nicht über die Trägerseite, sondern über, von der elektrochemischen Schicht ausgehend, seitlich herausgeführte Kontakte beispielsweise über eine in die Zelle integrierte Kontaktvorrichtung mit der ersten Spannungsquelle (2) verbunden ist
- wobei der mindestens eine Schwingungserzeuger auf der Trägerseite (6) auf das Trägersubstrat (5) aufgebracht oder in die Oberfläche des Trägersubstrats eingebettet ist
- wobei das Trägersubstrat (5) teilweise oder vollständig aus einem keramischen Material und/oder mindestens einem Ventilmetall aufgebaut ist oder ein keramisches Material und/oder mindestens ein Ventilmetall umfasst
- wobei der Schwingungserzeuger mit der ersten Spannungsquelle (2) oder einer weiteren Spannungsquelle (11) elektrisch kontaktiert ist,
- wobei das Elektrodenpaar so angeordnet ist, dass die elektrochemisch aktive Schicht (7) der mindestens einen Elektrode im Betriebsfall mit einem Elektrolyten in einem Behälter (1), in Kontakt gebracht werden kann
- wobei die mindestens eine Elektrode, die mindestens einen integrierten Schwingungserzeuger enthält, jeweils so angeordnet ist, dass der Schwingungserzeuger nicht mit dem Elektrolyten in Kontakt kommt,

In einer Ausführungsform, vorzugsweise wenn das Trägersubstrat aus mindestens einem Ventilmetall aufgebaut ist oder mindestens ein Ventilmetall umfasst, ist zwischen dem Trägersubstrat und der elektrochemisch aktiven Schicht eine raster- oder netzförmige Schicht, vorzugsweise mit einer Dicke von 1 - 50 µm aus einem Material mit hoher elektrischer Leitfähigkeit und hoher Korrosionsbeständigkeit angeordnet.

In einer Ausführungsform weist das Material eine Leitfähigkeit von 10⁵ bis 10⁷ S/m auf
In einer Ausführungsform ist die Schicht mittels Glaslot auf dem Trägersubstrat befestigt.

In einer Ausführungsform ist das Material ein Metall, ausgewählt aus der Gruppe der chemischen Elemente der Gruppen IVb, Vb, Vlb, Viib und Viib des Periodischen Systems und/oder ihren Legierungen untereinander.

In einer Ausführungsform ist das Material eine elektrisch bei Raumtemperatur gut leitfähige Keramik wie z.B. Wolframcarbid, Borcarbid, Titansuboxid.

In einer Ausführungsform ist das Material ein Verbund aus Metall und leitfähiger Keramik.

Erfindungsgemäß enthält die Elektrolysezelle mindestens ein Elektrodenpaar, welches mit einer Spannungsquelle (2) elektrisch verbunden ist.

In einer Ausführungsform enthält die Elektrolysezelle mehrere Elektrodenpaare. In einer Ausführungsform sind alle Elektrodenpaare mit derselben Spannungsquelle (2) elektrisch verbunden. In einer anderen Ausführungsform ist jedes Elektrodenpaar für sich mit einer eigenen Spannungsquelle verbunden. In einer Ausführungsform sind mehrere Elektrodenpaare, jedoch nicht alle, mit einer gemeinsamen Spannungsquelle elektrisch verbunden.

In einer Ausführungsform ist die Gegenelektrode der, den mindestens einen Schwingungsanreger aufweisenden ersten Elektrode bzw. zweiten Elektrode, eine Elektrode aus dem Stand der Technik.

Erfindungsgemäß weist mindestens eine der Elektroden, beispielsweise die erste Elektrode des Elektrodenpaares in der Elektrolysezelle mindestens einen integrierten Schwingungserzeuger auf.

In einer Ausführungsform ist die mindestens eine Elektrode, aufweisend einen Schwingungserzeuger, eine erfindungsgemäße Elektrode.

In einer Ausführungsform sind die Elektroden als Elektrodenarray angeordnet.

Erfindungsgemäß enthält die Elektrolysezelle mindestens ein Elektrodenpaar, umfassend eine erste Elektrode (3a) und eine zweite Elektrode (3b).

Mindestens die erste oder die zweite Elektrode des Elektrodenpaares umfasst also ein Trägersubstrat, enthaltend ein Trägermaterial, mit einer Trägerseite. Auf dem Trägersubstrat ist, der Trägerseite abgewandt, eine elektrochemische Aktivschicht aufgebracht. Diese bildet die elektrochemisch aktive Seite der Elektrode.

In einer Ausführungsform ist die Gegenelektrode der erfindungsgemäßen Elektrode eine Elektrode aus dem Stand der Technik.

Erfindungsgemäß ist das Elektrodenpaar so angeordnet, dass die elektrochemisch aktive Schicht im Betriebsfall mit einem Elektrolyten in einem Behälter (1), in Kontakt gebracht werden kann

Elektrolyt im Sinne der Erfindung ist eine Lösung, bevorzugt wässrige Lösung, enthaltend mindestens eine gelöste Verbindung, sodass der Elektrolyt mindestens eine niedrige elektrische Leitfähigkeit aufweist.

In einer Ausführungsform ist jede der erfindungsgemäßen Elektroden, welche mindestens einen integrierten Schwingungserzeuger enthält, so angeordnet, dass der Schwingungserzeuger nicht mit dem Elektrolyten in Kontakt kommen kann.

In einer Ausführungsform ist das Elektrodenpaar so angeordnet, dass der Zwischenraum zwischen beiden Elektroden als Reaktionsraum fungieren kann. In einer Ausführungsform kann der Elektrolyt in den Raum zwischen beiden Elektroden gefüllt werden oder durch den Raum zwischen beiden Elektroden eines Elektrodenpaares geleitet werden. In einer Ausführungsform sind beide Elektroden des Elektrodenpaares in die gegenüberliegenden Wände des Behälters integriert oder unter Verwendung von Dichtungen so an den gegenüberliegenden Wänden des Behälters befestigt, dass die Trägerseite, enthaltend den mindestens einen Schwingungserzeuger, nicht mit einem Elektrolyten in Kontakt kommen kann.

In einer Ausführungsform wird mittels Dichtungen verhindert, dass der mindestens eine Schwingungserzeuger mit einem Elektrolyten in Kontakt kommen kann.

In einer Ausführungsform befinden sich der oder die Schwingungserzeuger auf der Außenseite des Reaktionsraumes. Auf diese Weise wird sichergestellt, dass keine stofflich induzierte Reaktion mit den oder chemische Degeneration durch die zu behandelnden Elektrolyten oder Stoffströme unter Beteiligung chemischer Bestandteile der Schwingungserzeuger, beispielsweise Piezoelemente, erfolgen kann. Die Übertragung des Ultraschalls erfolgt mittels des in Schwingungen versetzten Trägersubstrats auf den zu behandelnden Elektrolyten.

In einer Ausführungsform ist das Trägersubstrat der erfindungsgemäßen Elektrode röhrenförmig, wobei die Grundfläche der Röhre verschiedene geometrische Formen haben kann. Dann entspricht die Außenseite der Röhre oder des Zylinders der Trägerseite des Trägersubstrats und die Innenseite der Röhre entspricht der elektrochemisch aktiven Seite des Trägersubstrats. Im Zentrum der Röhre befindet sich die zweite Elektrode bzw. Gegenelektrode, welche beispielsweise als Stab ausgebildet sein kann.

Der Zwischenraum zwischen der röhrenförmigen (äußeren) Elektrode und der innenliegenden Gegenelektrode kann mit einem Elektrolyten befüllt werden oder ein Elektrolyt kann durch ihn durchgeleitet werden.

In einer Ausführungsform ist in dem Zwischenraum zwischen äußerer Elektrode und innenliegender Gegenelektrode ein Separator angeordnet. Vorteilhaft können so, wenn vorhanden, Anolyt und Katholyt voneinander getrennt und beispielsweise in verschiedenen Kreisläufen geführt werden.

Vorteilhaft erzielt man durch die Schwingungen einer der Elektroden oder beider Elektroden eines Elektrodenpaares während einer Elektrolyse eine stärkere Durchmischung des Elektrolyten, sodass an die Phasengrenzschicht zur Elektrode stets neue, beispielsweise zu zersetzende Verbindungen angetragen werden, und diese dann elektrochemisch umgesetzt werden können.

Außerdem erfolgt in einer Ausführungsform eine mechanische Zerstörung der Verunreinigungen durch die Schwingungswellen, die von dem mindestens einen Schwingungserzeuger ausgehend, auf die Elektroden und darüber auf den Elektrolyten übertragen werden.

Die erfindungsgemäße Elektrolysezelle bzw. erfindungsgemäße Elektrode ist damit vorteilhaft sehr gut geeignet für hohe Volumendurchsätze an aufzuarbeitenden Lösungen und niedrige Verweilzeit der Lösungen innerhalb der Elektrolysezelle. Eine kontinuierliche Aufarbeitung beispielsweise von kontinuierlich durchströmenden Flüssigkeiten ist damit möglich.

In einer Ausführungsform kann die Elektrolysezelle vom Elektrolyten durchströmt werden. In einer Ausführungsform weist die Elektrolysezelle dazu mindestens einen Zulauf und mindestens einen Ablauf auf, welche so angeordnet sind, dass der Elektrolyt durch den Zulauf einströmen, mit mindestens einer Elektrode in Kontakt gebracht und durch den Ablauf wieder ausströmen kann.

Vorteilhaft ist damit auch eine Behandlung von Abwässern mit niedrigeren Konzentrationen an verunreinigenden Substanzen und damit verbundenen schlechten elektrischen Leitfähigkeiten möglich. In einer Ausführungsform ist die Konzentration der Substanz, die durch das erfindungsgemäße Verfahren zersetzt oder anderweitig entfernt werden soll, kleiner 0,1 mol /l, bevorzugt kleiner 0,05 mol/l, besonders bevorzugt kleiner 0,01 mol/l, insbesondere kleiner 0,001 mol/l.

In einer Ausführungsform ist die elektrische Leitfähigkeit des zu behandelnden Abwassers 0,1 bis 10 mS/cm, bevorzugt 0,1 bis 5 mS/cm, insbesondere 0,2 bis 1 mS/cm.

Gegenstand der Erfindung ist auch die Verwendung einer erfindungsgemäßen Elektrode in einem Elektrolysprozess und/oder Elektrodialyseprozess. In einer Ausführungsform wird der Elektrolyse- und/oder Elektrodialyseprozess zur Aufarbeitung von Verunreinigungen enthaltenden wässrigen Lösungen und/oder zur Beschleunigung chemischer Synthesen eingesetzt.

In einer Ausführungsform sind die chemischen Synthesen elektrochemisch induzierte Synthesen.

In einer Ausführungsform sind die Verunreinigungen enthaltenden wässrigen Lösungen, beispielsweise Abwässer, ausgewählt aus Industrieabwässern, Produktionsabwässern und/oder Haushaltsabwässern.

In einer Ausführungsform sind die Verunreinigungen ausgewählt aus anorganischen und/oder organischen Molekülen. In einer Ausführungsform sind die organischen Moleküle komplexe organische Moleküle, beispielsweise pharmazeutische Wirkstoffe oder Verbindungen, Amine, Weichmacher, Antibiotika und/oder Viren.

In einer Ausführungsform werden die organischen Moleküle in einem Elektrolyseprozess in niedermolekulare Abbauprodukte, überwiegend in CO₂, zersetzt.

In einer Ausführungsform erfolgt die Zersetzung bei Stromdichten von 0,1 bis 50 mA/cm², bevorzugt 0,1 bis10 mA/cm².

Gegenstand der Erfindung ist auch ein Verfahren zur Behandlung von Abwasser unter Verwendung der erfindungsgemäßen Elektrode und/oder der erfindungsgemäßen Elektrolysezelle.

Dabei wird die wässrige Lösung, enthaltend die Verunreinigungen als Elektrolyt in einem Behälter der Elektrolysezelle vorgelegt. Mindestens ein Elektrodenpaar ist dabei so angeordnet, dass wenigstens ein Teil elektrochemischen Aktivschicht bzw., wenn es sich um eine herkömmliche Elektrode handelt, der Oberflächen der Elektrode, in den Elektrolyten eintauchen oder mit diesem in Kontakt kommen.

Durch das Anlegen eines ausreichend hohen Potentials an der Spannungsquelle (2) erfolgt die elektrochemische Behandlung der Verunreinigungen, beispielsweise deren Oxidation mittels der oben beschriebenen Bildung reaktiver Sauerstoffspezies, wobei die verunreinigenden Moleküle zu ihren Abbauprodukten reagieren.

Vorteilhaft kann mindestens eine der Elektroden, die in diesem Verfahren eingesetzt werden, in Schwingungen versetzt werden, sodass an die Phasengrenzschicht zur Elektrode stets neue, beispielsweise zu zersetzende Verbindungen angetragen werden, und diese dann elektrochemisch umgesetzt werden können.

Überraschend wurde festgestellt, dass mittels der durch die erfindungsgemäße Elektrode erzeugten Vibrationen die im Elektrolyten befindlichen Verbindungen nach veränderten Reaktionsmechanismen ablaufen, welche einen schnelleren und effizienteren Abbau der Verunreinigungen ermöglichen.

Die Kombination aus elektrochemischer und sonochemischer Aktivierung des Systems bei geringen Stromdichten von 0,1 bis 50 mA/cm², bevorzugt 0,1 bis10 mA/cm² ermöglicht dabei eine signifikante Steigerung der Effizienz des Abbauprozesses.

So kann u.a. eine mechanische Zerstörung der Verunreinigungen durch die Schwingungswellen erfolgen, die von dem mindestens einen Schwingungserzeuger ausgehend, auf die Elektroden und darüber auf den Elektrolyten übertragen werden.

Weiterhin werden die beschriebenen Stofftransportprozesse an der Anodenoberfläche, wie beispielsweise eine Oxidation von Fe(II) zu Fe(III) signifikant verbessert. Wenn beispielsweise die Oxidation nur diffusionskontrolliert erfolgt, kommt es durch den Ultraschalleintrag zu einer Verringerung des Konzentrationsgefälles vom Elektrolyten zur Phasengrenze an der Oberfläche der Anode. Da die Elektrolyse mit geringen Stromstärken betrieben wird, kommt es vorteilhaft nur zu einer geringen Gasentwicklung. Ein verstärkter Gasblasenaustrag aus dem System durch Ultraschalleintrag muss hier nicht oder kaum stattfinden und muss deshalb bei der Betrachtung der Prozesseffizienz nicht beachtet werden.

Demzufolge kann man auch bei den untersuchten Spurenstoffen von einer Verbesserung der Stofftransportverhältnisse durch Ultraschalleintrag während der Elektrolyse ausgehen, was zu den beschriebenen Steigerungen der Reaktionsgeschwindigkeiten und den daraus resultierenden positiven Synergieeffekten führt

Weiterhin führt die Intensivierung der o.g. diffusionskontrollierten Reaktionen zur Verhinderung von Reaktionen, die zu irreversiblen Adsorptions- und Scalingprozessen und damit zur Beeinträchtigung der Effizienz der Elektrolysezellen führen würden.

Durch Probennahme kann die Abnahme an verunreinigenden oder belastenden Substanzen bestimmt werden.

Die Elektrolytische Behandlung des Abwassers erfolgt so lange, bis die Konzentration der belastenden Substanz einen bestimmten Wert unterschritten hat.

Ein Beispiel dafür ist die elektrochemische Behandlung von ibuprofenhaltigen wässrigen Lösungen, wobei die organische Verbindung zu Kohlendioxid oxidiert:
Anode:

   C₁₃H18O₂ + 24 H₂O -7 13 CO₂ + 66 H⁺ + 66 e⁻
Kathode:

   66 H⁺ + 66 e⁻ → 33 H₂

Gegenstand der Erfindung ist auch ein Verfahren zur Herstellung einer erfindungsgemäßen Elektrode mit den Schritten:
a) Bereitstellen eines Trägersubstrats mit einer ersten und einer zweiten Seite beispielsweise einer Vorderseite oder elektrochemisch aktive Seite (4) und einer Rückseite oder Trägerseite (6), wobei das Trägersubstrat teilweise oder vollständig aus einem keramischen Material und/oder mindestens einem Ventilmetall aufgebaut ist oder ein keramisches Material und/oder mindestens ein Ventilmetall umfasst
b) Aufbringen einer elektrochemischen Funktionsschicht (auch: Aktivschicht) auf die erste Seite, beispielsweise elektrochemisch aktive Seite (4), des Trägersubstrats (komplett oder partiell)
c) Aufbringen der Funktionsschichten mindestens eines Schwingungserzeugers auf die zweite Seite, beispielsweise Trägerseite (6) des Trägersubstrats.
d) Aufbringen einer Funktionsschicht für Anschlusspad oder Kontaktelektrode auf die zweite Seite des Trägersubstrats

In einer Ausführungsform erfolgen vor Schritt b) die Schritte
e) Einbringen mindestens einer durchgehenden Öffnung durch die Wandung des Substrats, welche die erste und die zweite Seite des Substrats miteinander verbindet
f) Einbringen eines elektrisch leitenden Materials in die Öffnung des Substrates, sodass beide Seiten des Substrates leitfähig miteinander verbunden sind

Die Reihenfolge der Schritte b) bis d) ist austauschbar. Jedoch versteht sich, dass die Schritte e) und f) zu erfolgen haben, bevor die Öffnung in der Wandung des Substrats von beiden Seiten mit einer Funktions- oder Aktivschicht bedeckt ist.

Die erste Seite des Trägersubstrats kann die Vorderseite sein, die zweite Seite des Substrats die Rückseite, oder umgedreht.

In einer Ausführungsform werden die Schritte b) bis d) so geordnet, dass das Auf- oder Einbringen der Schicht als erstes erfolgt, die das Material mit dem höchsten Schmelzpunkt aufweist.

Erfindungsgemäß erfolgt zunächst das Bereitstellen eines Trägersubstrats
In einer Ausführungsform ist das Trägersubstrat flacher Quader oder eine Folie mit einer Ober- und einer Unterseite bzw. einer ersten und einer zweiten Seite, welche sich gegenüberliegen.

In einer Ausführungsform enthält die Trägerseite des Trägersubstrats mindestens eine Vertiefung, die dazu geeignet ist, einen Schwingungserzeuger in das Trägersubstrat einzubetten.

In einer Ausführungsform ist das Trägersubstrat zylinder- oder röhrenförmig. Dann entspricht die Außenseite der Röhre oder des Zylinders der Trägerseite der oben beschriebenen Elektrode und die Innenseite der Röhre entspricht der elektrochemisch aktiven Seite der Elektrode. Im Zentrum der Röhre befindet sich die Gegenelektrode, welche beispielsweise als Stab ausgebildet sein kann.

Der Zwischenraum zwischen der Röhrenförmigen (äußeren) Elektrode und der innenliegenden Gegenelektrode kann mit einem Elektrolyten befüllt werden oder ein Elektrolyt kann durch ihn durchgeleitet werden.

Das Trägersubstrat verfügt an seiner Wandung über mindestens eine durchgehende Öffnung, welche durch die Wandung des Substrats von der ersten Seite zu der zweiten Seite führt und diese Seiten miteinander verbindet.

In einer Ausführungsform ist die durchgehende Öffnung kreisförmig. In einer Ausführungsform ist der Durchmesser der Öffnung 0,1 bis 10 mm.

In einer Ausführungsform ist das Material des Trägersubstrats ein keramisches Material.

In einer Ausführungsform enthält das Trägersubstrat ein keramisches Material.

In einer Ausführungsform besteht das Trägersubstrat aus einem keramischen Material.

In einer Ausführungsform ist das Trägersubstrat mikroporös und kann so zugleich auch als semipermeable Membran dienen.

In einer Ausführungsform ist das keramische Material ausgewählt aus Aluminiumoxid, Aluminiumnitrid oder Niedertemperatur-Einbrand-Keramiken (Low Temperature Cofired Ceramics (LTCC).

Erfindungsgemäß ist das Trägersubstrat teilweise oder vollständig aus einem keramischen Material und/oder mindestens einem Ventilmetall aufgebaut oder umfasst ein keramisches Material und/oder mindestens ein Ventilmetall.

In einer Ausführungsform besteht das Trägersubstrat aus mindestens einem Ventilmetall.

Ventilmetalle sind von Natur aus wesentlich elastischer und haben eine wesentlich höhere Leitfähigkeit als Keramiken. Trägersubstrate, umfassend oder bestehend aus mindestens einem Ventilmetall sind damit stabiler gegenüber mechanischen Schwingungen.

In einer Ausführungsform, wird, wenn das Trägersubstrat aus mindestens einem Ventilmetall aufgebaut ist oder mindestens ein Ventilmetall umfasst, vor Schritt c) eine elektrisch schlecht oder nicht leitende Zwischenschicht auf der zweiten Seite des Trägersubstrats, auf die auch der Schwingungserzeuger angebracht wird, angeordnet.

Ist das Trägersubstrat aus mindestens einem Ventilmetall aufgebaut oder umfasst es mindestens ein Ventilmetall, so wird in einer Ausführungsform zwischen Trägersubstrat und Schwingungselement eine elektrisch schlecht oder nicht leitende Zwischenschicht angeordnet.

In einer Ausführungsform ist die Zwischenschicht eine Schicht eines Oxids des mindestens einen oder mindestens eines Ventilmetalls.

In einer Ausführungsform ist die Zwischenschicht eine Schicht, umfassend ein Metalloxid.

In einer Ausführungsform erfolgt das Generieren der Zwischenschicht auf dem Trägersubstrat durch elektrochemische Oxidation der Oberfläche des Trägersubstrats in saurer Lösung, beispielsweise mittels Schwefelsäure, oder dessen thermische Oxidation bei Temperaturen > 700 °C bis 1500°C. Dabei bildet sich eine nicht oder schlecht leitende Schicht aus Ventilmetalloxid auf der Oberfläche des Trägersubstrats.

Sofern es sich bei der nachfolgend aufzubringenden elektrochemisch aktiven Schicht um eine handelt, die chemische Elemente der VIII. Gruppe des Periodischen Systems umfasst oder aus diesen besteht, erfolgt die Oxidation der Trägerseite des Substrats nach der Beschichtung mit der elektrochemisch aktiven Schicht.

Im anderen Falle wird die durch Oxidation gebildete Oxidschicht, auf der elektrochemisch aktiven Seite bzw. der Seite, auf die später die elektrochemisch aktive Schicht aufgebracht wird, vor Aufbringen der elektrochemisch aktiven Schicht bzw. vor Aufbringen des Stomverteilers z.B. chemisch durch Behandeln mit Oxalsäure oder anderen hierfür geeigneten Säuren und/oder Lösungsmitteln oder aber mechanisch entfernt.

In einer Ausführungsform enthält das Trägersubstrat ein polymeres Material.

In einer Ausführungsform erfolgt mit dem Bereitstellen des Trägersubstrats eine Vorbehandlung, beispielsweise Anätzen seiner Oberfläche.

In einer Ausführungsform wird mindestens eine Vertiefung in das Trägersubstrat eingearbeitet,

In einer Ausführungsform erfolgen, bevorzugt nach dem Bereitstellen des Trägersubstrats, bevorzugt vor Schritt b), die Schritte e) Einbringen mindestens einer durchgehenden Öffnung durch die Wandung des Substrats, welche die erste und die zweite Seite des Substrats miteinander verbindet, und f) Einbringen elektrisch leitenden Materials in die mindestens eine Öffnung in der Wandung des Trägersubstrats. Es versteht sich, dass Schritt f) stets nach Schritt e) erfolgt.

In einer Ausführungsform erfolgt das Einbringen der Öffnung durch Bohren.

In einer Ausführungsform erfolgt Schritt f) mit einer Suspension, enthaltend ein elektrisch leitendes Material, oder mit einem elektrisch leitenden Werkstoff.

In einer Ausführungsform erfolgt die Füllung der Öffnung mittels Sieb- oder Schablonendruck.

In einer Ausführungsform ist das Lösungsmittel der Suspension ausgewählt aus Ölen, beispielsweise Terpentinöl. In einer Ausführungsform ist das elektrisch leitende Material ausgewählt aus Partikeln von Ag, Au, Pd, Pt, Ir, Rh, Cr, Ni, Cu, Mo, Nb, deren Legierungen miteinander oder von elektrisch leitfähigen Kohlenstoffmodifikationen.

Anschließend erfolgt eine thermische Behandlung, wobei organische Komponenten aus der Suspension, mit der die Öffnung gefüllt wird, ausgetrieben werden. Dies kann durch Verdampfung, Oxidation oder Pyrolyse erreicht werden.

In einer Ausführungsform ist der elektrisch leitende Werkstoff zur Zeit der Füllung der Öffnung flüssig oder viskos. In einer Ausführungsform ist der elektrisch leitende Werkstoff ausgewählt aus Ag, Au, Pd, Pt, Ir, Rh, Cr, Ni, Cu, Mo, Nb, deren Legierungen miteinander oder aus elektrisch leitfähigen Kohlenstoffmodifikationen. Der Werkstoff kann beispielsweise als Schmelze in die Öffnung gefüllt werden.

In einer Ausführungsform, erfolgt vor Schritt b), also vor dem Aufbringen der elektrochemisch aktiven Schicht das Aufbringen eines netz- oder gitterförmigen Stromverteilers aus einem Material mit hoher elektrischer Leitfähigkeit und vorzugsweise hoher Korrosionsbeständigkeit auf die erste Seite, beispielsweise elektrochemisch aktive Seite (4), des Trägersubstrats. Dieser Schritt kann je vor oder nach den Schritten e) oder f) erfolgen, also vor oder nach Einbringen der mindestens einen Öffnung in die Wandung und vor oder nach dem Füllen der Öffnung.

In einer Ausführungsform ist der Stromverteiler eine netzförmige Metallfolie oder ein Drahtgeflecht. In einer Ausführungsform ist der Stromverteiler eine raster- oder netz- oder gitterförmige Schicht auf dem Trägersubstrat.

In einer Ausführungsform ist die Schicht mittels Glaslot auf dem Trägersubstrat befestigt. In einer Ausführungsform erfolgt das Aufbringen mittels Sieb- oder Schablonendruck.

In einer Ausführungsform weist die raster- oder netz- oder gitterförmige Schicht eine Dicke von 1 - 50 µm auf.

In einer Ausführungsform besteht die Schicht aus einem Material mit hoher elektrischer Leitfähigkeit und hoher Korrosionsbeständigkeit
In einer Ausführungsform ist das Material ein Metall, ausgewählt aus den chemischen Elementen der Gruppen IVb, Vb, Vlb, Viib und Viib des Periodischen Systems und/oder ihren Mischungen oder Legierungen untereinander.

In einer Ausführungsform ist das Material eine elektrisch bei Raumtemperatur gut leitfähige Keramik wie z.B. Wolfamcarbid, Borcarbide, Titansuboxid.

In einer Ausführungsform ist das Material ein Verbund aus Metall und leitfähiger Keramik.

In einer Ausführungsform erfolgt die Füllung der Öffnung in Schritt b) mittels Sieb- oder Schablonendruck.

In einer Ausführungsform erfolgt das Aufbringen der Funktionsschichten von elektrochemisch aktiver Schicht, Schwingungserzeuger und/oder Anschlusspad/Kontaktelektrode auf der Basis des Siebdruckes, beispielsweise mittels Dickschichtpasten, oder Strukturierungsverfahren ausgewählt aus Inkjet-, Stempel- sowie der Aerosoldruck. Auch chemische Verfahren wie die thermochemische Abscheidung oder diejenige durch sog. Chemical Vapor Deposition (CVD), galvanische Abscheidung, speziell die außenstromlose Abscheidung und physikalische Abscheidung wie Plasmabeschichtungen werden zur Auftragung der Funktionsschichten genutzt. Eine für die elektrochemische Funktionalität hinreichende elektrische Leitfähigkeit der Substratoberfläche lässt sich auch mittels lonenimplantation oder durch radioaktive Bestrahlung der keramischen Substrate erzielen.

In einer Ausführungsform werden, beispielsweise durch Löten, direkt von der elektrochemischen Schicht abgehend elektrisch leitende Verbindungen, beispielsweise Draht, zur späteren Kontaktierung mit einer Spannungsquelle angeordnet.

In eine Ausführungsform erfolgt der Siebdruck mittels lokal definierten Auftrags von pastösen Dickschichtsuspensionen.

Dickschichtsuspensionen oder Dickschichtpasten sind Suspensionen, die Partikel eines funktionellen Werkstoffs, die sogenannte Wirkphase, enthalten. Dabei kann es sich je nach Funktionsschicht vorteilhaft um bestimmte Metalle, ausgewählt aus den Gruppen III, IV, IVb, Vb, Vlb, Vllb und Vlllb des Periodischen Systems der Elemente und deren Legierungen untereinander, um oxidische Verbindungen der o.g. Metalle und um gemischte Oxide der vorgenannten Metalle sowie um isolierende und/oder um piezoaktive Partikel handeln, namentlich um solche aus Perovskiten.

In einer Ausführungsform beträgt der Massenanteil der Wirkphase an der Gesamtmasse der Dickschichtpaste 20 bis 80%, bevorzug 30 bis 70%.

Als haftungsbildender Bestandteil sind Glaspartikel, beispielsweise Partikel von Borosilikatglas oder Wismut haltigen Glas und/oder Polymere Bestandteile, bevorzugt in Pulverform, in der Suspension eingearbeitet.

In einer Ausführungsform beträgt der Massenanteil an haftungsbildenden Bestandteilen 5 bis 30%, bevorzugt 10 bis 20 % an der Gesamtmasse der Dickschichtpaste.

Neben den Partikeln ist eine Flüssigkeit enthalten, die ggf. ein Bindemittel ist oder in der ein Bindemittel in Form einer Emulsion oder in gelöster Form enthalten ist.

In einer Ausführungsform beträgt der Massenanteil an Bindemittel oder Bindemittel in Flüssigkeit 10 bis 30%, bevorzugt 12 bis 25 % der Gesamtmasse der Dickschichtpaste.

In einer Ausführungsform ist das Bindemittel ausgewählt aus Acetaten, Cellulosederivaten oder Acrylaten. In einer Ausführungsform ist die Flüssigkeit ausgewählt aus Ölen.

Die Suspension sollte eine strukturviskose Konsistenz mit einer zum Siebdrucken geeigneten Viskosität aufweisen.

Die Funktionsschichten können beliebige geometrisch planare Formen aufweisen.

In einer Ausführungsform werden die geometrischen Formen durch ein Drucksieb abgebildet.

In einer Ausführungsform werden während des Siebdruckes die Werkstoffe in pastöser strukturviskoser Form verarbeitet. Üblicherweise können hierfür Dickschichtpasten eingesetzt werden. Ebenso ist die Herstellung von Funktionselementen mit zylindrischer Geometrie möglich, z.B. in Form von röhrenförmigen Elementen. Der keramische Substratwerkstoff kann dabei auch mikroporös sein und so zugleich auch als semipermeable Membran dienen. Derartige Geometrien lassen sich aber auch mit den anderen vorgenannten Abscheidungsverfahren herstellen.

In einer Ausführungsform erfolgt nach dem lokal definierten Auftrag der pastösen Dickschichtsuspensionen auf der Oberfläche des Substrats, eine thermische Behandlung, bei der eine Trocknung, Polymerisation und/oder Sinterung des Werkstoffs, mit dem die mindestens eine Funktionsschicht ausgebildet wird, erreicht wird, durchgeführt werden.

Bei dieser oder einer davor durchgeführten thermischen Behandlung können organische Komponenten aus der Suspension, mit der die mindestens eine funktionelle Schicht gebildet wird, ausgetrieben werden. Dies kann durch Verdampfung, Oxidation oder Pyrolyse erreicht werden.

In einer Ausführungsform erfolgt jede Abscheidung einer Funktionsschicht mittels Dickschichttechnologie mit einem angepassten Drucksieb. In einer Ausführungsform schließt sich an jeden Druckschritt die beschriebene thermische Behandlung an.

Erfindungsgemäß erfolgt in einem weiteren Schritt des Verfahrens das Aufbringen der elektrochemisch aktiven Schicht auf einer Seite des Substrats.

In einer Ausführungsform erfolgt das Auftragen der elektrochemischen Aktivschicht durch Leiterzugpasten der Dickschichttechnik, galvanische, thermochemische oder CVD-Abscheidung oder 3-D-Druck.

In einer Ausführungsform enthält die elektrochemische Aktivschicht ein Anodenmaterial, wie es bereits oben beschrieben wurde.

In einer Ausführungsform wird das Trägersubstrat auf der elektrochemisch aktiven Seite zunächst mit einer Säure oder Säuremischung, beispielsweise aus Phosphorsäure, Salpetersäure und Essigsäure angeätzt. Vorteilhaft erhöht sich damit die Haftfestigkeit der nachfolgend aufgetragenen Funktionsschicht.

Ein grundlegender Unterschied der neuen Methode im Vergleich zu nasschemischen Verfahren, welche unter erhöhten Drücken und in organischen Lösungsmitteln arbeiten (siehe beispielsweise Koebel et al. ACS Appl. Mater. Interfaces 2012, 4, 2464-2473.; Goebbert et al. Thin Solid Films 1999, 351, 79-84.; Jeon et al. Materials Letters 2005, 59 1801-1810.), ist die einfache, preiswerte Präparation. Die Präkusoren der Aktivschicht, beispielsweise SnCl₄ und SbCl₃, werden beispielsweise in einem wässrigen System angemischt und einer Polykondensation unterzogen, wobei ein kolloidales System entsteht.

Zur Beschleunigung der Polykondensation kann beispielsweise ein Carbonat als "Protonen-Konsument" verwendet werden.

Die so vorbereitete Paste kann dann auf das Trägersubstrat aufgebracht werden und nach Trocknung kalziniert werden. In einer Ausführungsform erfolgt der Auftrag mehrerer Schichten des Materials.

In einer Ausführungsform wird die elektrochemische Aktivschicht auf einem dem Fachmann bekannten thermochemischen Weg aufgetragen.

In einem Schritt erfolgt das Aufbringen der Funktionsschichten des mindestens einen Schwingungserzeugers auf die planare Trägerseite oder in die mindestens eine Vertiefung der Trägerseite.

In einer Ausführungsform erfolgt dies mittels Dickschichtpasten auf die Seite (Trägerseite) des Trägersubstrats, auf welche die elektrochemische Aktivschicht nicht aufgetragen wurde, und anschließende thermische Behandlung.

In einer Ausführungsform werden mittels Druckschablone Grundelektrode, Piezoschicht, und Deckelektrode übereinander aufgebracht. In einer Ausführungsform wird danach oder davor ein Anschlusspad auf die Trägerseite, jedoch nicht auf ein Schwingungselement, aufgebracht, so dass das Anschlusspad, die mit leitendem Material gefüllte Öffnung und die elektrochemisch aktive Schicht durch das Trägersubstrat hindurch miteinander leitfähig verbunden sind.

Die aktiven Schichten für den Schwingungserzeuger werden im Anschluss gepolt.

Eine Ausführungsform zur Aufbringung der Schwingungserzeuger ist die Nutzung monolithischer Piezoelemente (8).

Die Piezoelemente werden hierbei auf die Grundelektroden durch elektrisch und mechanische Klebe-, Löt- und/oder Sinterprozesse montiert. Anstelle der Deckelektrode erfolgt eine Kontaktierung zu dem Anschlusspad oder den Anschlusspads, vorzugsweise durch das Drahtbonden.

In einem weiteren Schritt erfolgt das Aufbringen einer Kontaktelektrode auf die zweite Seite des Trägersubstrats.

In einer Ausführungsform erfolgt dies mittels Dickschichtpaste und Siebdruck oder unter Nutzung einer der o.g. Technologien.

Des Weiteren verfügt die erfindungsgemäße Elektrolysezelle und/oder eine erfindungsgemäße Elektrode über einen Selbstreinigungseffekt zur Verminderung/Vermeidung von Scaling und Biofouling zur Aufrechterhaltung der Leistungsfähigkeit im Betriebsfall.

Es empfiehlt sich die Ausführungsformen miteinander zu kombinieren.

Nachfolgende Beispiele und Abbildungen sollen die Erfindung näher erläutern, ohne beschränkend zu wirken.

Es zeigen:

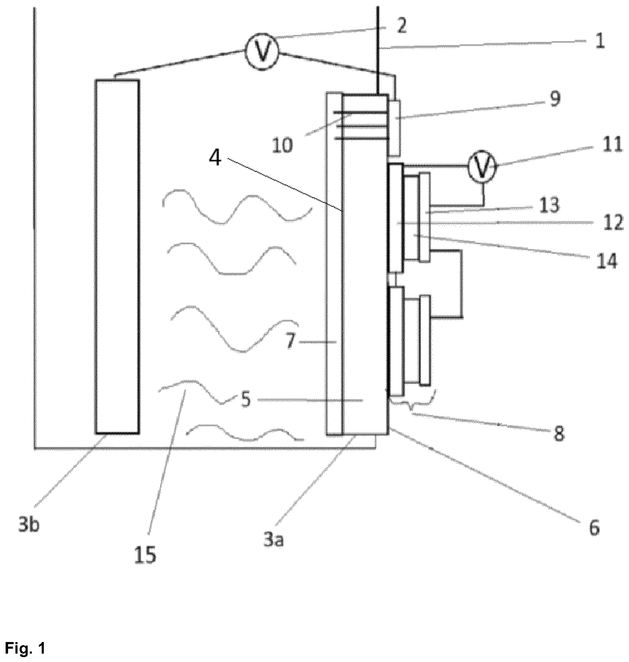

Fig. 1 - erfindungsgemäße Elektrolysezelle mit einem Behälter (1), in welchen ein Elektrdyt eingefüllt werden kann. Die Elektroden (3a) und (3b) sind so angeordnet, dass sie im Betriebsfall in den Elektrolyten eintauchen können. Die erste Elektrode (3a) entspricht einer erfindungsgemäßen Elektrode. Sie besteht aus Trägersubstrat (5) mit einerTrägerseite (6) und einer elektrochemisch aktiven Seite. Auf die elektrochemisch aktive Seite ist eine Schicht aus elektrisch leitendem Material (7) aufgebracht. Auf der Trägerseite sind mindestens ein Schwingungserzeuger (8), hier ein Piezoelement angeordnet. Das Piezoelement besteht aus Grundelektrode (12), Deckelektrode (13) und dazwischen angeordnet eine Piezoschicht (14). Grund- und Deckelektrode sind mit einer Spannungsquelle (11) kontaktiert, welche so ausgelegt ist, dass eine Wechselspannung generiert werden kann. Der in der Abbildung obere Piezoschwinger ist über eine Parallelschaltung mit einem weiteren Piezoschwinger elektrisch verbunden. Auf der Trägerseite ist ein Anschlusspad (oder auch Kontaktelektrode genannt) (9) in Form eines Pads angebracht. Dieses ist mit der Spannungsquelle (2) elektrisch verbunden. Von der Kontaktelektrode (9) ausgehend verlaufen elektrisch leitende Vias (10) durch das Trägersubstrat hindurch in die elektrochemisch aktive Schicht hinein und ermöglichen so das Anlegen eines Potentials an die Elektrode.

Die Elektrode (3b) fungiert als Gegenelektrode zur Elektrode (3a)
Im Betriebsfall wird ein Elektrolyt (15) in den Behälter (1) gefüllt, welcher so mit den elektrochemisch aktiven Funktionsschichten der Elektroden, mindestens partiell, in Kontakt gebracht wird. Durch Anlegen einer Spannung an der Spannungsquelle (2) wird die Elektrolyse betrieben und die im Elektrolyten vorhandenen Verbindungen beispielsweise anodisch oxidiert bzw. abgebaut. Durch das Anlegen eines Potentials an der Spannungsquelle (11) wird die Elektrode über die Schwingungserzeuger (8) in mechanische Schwingungen versetzt und die Bewegung auf den Elektrolyten übertragen, sodass eine bessere Durchmischung der Flüssigkeit erfolgt und die Verbindungen effizient an die Phasengrenze zur Anode und Reaktionsprodukte, speziell reaktive Sauerstoffspezies, in die diffuse Elektrodengrenzschicht transportiertwerden können.

Der Piezowandler ist ein PZT Keramikwandler mit einem Durchmesser von bis zu 10 mm und einer PZT Schichtdicke von 100 µm.

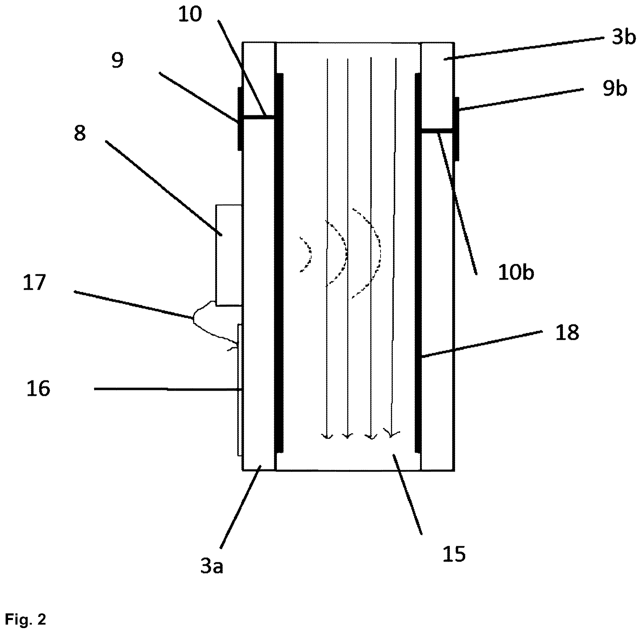

Fig. 2 zeigt schematisch ein Elektrodenpaar im Ausschnitt, wobei die beiden Elektroden (3a und 3b) parallel zueinander angeordnet sind. Im Raum zwischen den Elektroden befindet sich ein Elektrolyt (15) welcher den Raum durchströmen kann oder statisch darin vorliegt. Auf die Trägerseite des Substrats der Elektrode 3a ist ein Schwingungserzeuger (8) aus Grundelektrode, Deckelektrode und dazwischen angeordneter Piezoschicht, aufgebracht, welcher über ein Drahtbonding (17) mit einer Anregerelektrode, welche ebenfalls als Funktionsschicht aufgebracht ist, (16) kontaktiert ist. Die Kontaktelektrode (9) ermöglicht über eine Durchkontaktierung (10) einen Stromfluss zur elektrochemisch aktiven Schicht.

Die Gegenelektrode ist ähnlich aufgebaut, verfügt hier jedoch über keinen Schwingungserzeuger. Die Funktionsschicht (18) auf der dem Elektrolyten zugewandten elektrochemisch aktiven Seite enthält ein für die Funktion der Elektrode 3a angepasstes Material.

### Ausführungsbeispiel 1 - Beschichtung des Trägersubstrats mit elektrochemischer Aktivschicht

Durch thermisches Anätzen einer Aluminiumoxidkeramik von 2,54x2,54 mm mit einer Säuremischung (73 v% H₃PO₄ : 3,1 v% HNOs : 3,3 v% CH₃COOH : 20,6 v% H₂O) nach vorheriger Entfettung mit Aceton im Ultraschallbad, wird das Trägersubstrat vorbereitet. Nach dem Ätzprozess wird die Keramik bei 350°C für 15 min ausgeheizt.

Es erfolgt parallel die Präparation eines wässrigen Systems mit den Präkursoren SnCl₄ und SbCl₃ (15 mol% Sb: 10,71 mmol SnCl₄ + 1,89 mmol SbCl₃). Zur Beschleunigung der Polykondensation dieser gemischten Sn-, Sb-Chloro-Aqua-Komplexe wird Carbonat (0,2 M Na₂CO₃) als "Protonen-Konsument" verwendet. Es erfolgt eine thermische Behandlung bei 80°C zur Ausbildung eines kolloidalen Systems.

In dieses System wird die Aluminiumoxidkeramik getaucht, im Trockenschrank (150 °C, 30 min) getrocknet und danach sofort im Muffelofen (550 °C, 60 min) kalziniert.

### Ausführungsbeispiel 2a

Ein Substrat aus nichtleitenden Al₂O₃ mit einer Dicke von 2 mm, einer Abmessung von 2,54 mm x 2,54 mm und einer durch das Substrat hindurchgehenden Öffnung mit einem Durchmesser von 1 mm wurde in einem Ätzprozess, analog Beispiel 1, vorbehandelt.

Im Anschluss erfolgte die Füllung der Öffnung mit einer Suspension, enthaltend ein Öl, Silberpartikel und Metallpartikel. Nach thermischer Behandlung bei 900°C erfolgt der Auftrag einer Platinhaltigen Dickschichtpaste mittels Siebdruck, um die elektrochemische Aktivschicht mit den Abmessungen 2,54 x 2,54 mm auf einer Substratseite zu realisieren. Es erfolgt eine thermische Behandlung bei 850 - 950°C.

Im Anschluss daran erfolgt der Auftrag der Grundelektrode des Piezoelements auf der Rückseite des Substrats durch Aufbringung einergoldpartikelhaltigen Dickschichtpaste mittels Siebdruck mit einer Schichtdicke von 30 µm in Form eines Kreises mit 15 mm Durchmesser. Nach thermischer Behandlung bei 850 °C erfolgt das Auftragen der Piezoschicht von 100 µm Dicke, mittels Dickschichtpaste, enthaltend Weich-PZT-Keramik auf die Grundelektrode, in Form eines Kreises von ca. 11 mm Durchmesser. Es folgt eine thermische Behandlung bei 600 °C.

Im Anschluss wird mittels Siebdruck eine zweite goldpartikelhaltige Dickschicht mit einer Schichtdicke in Form eines Kreises von 10 mm Durchmesser auf die Piezoschicht aufgebracht. Diese Deckelektrodenschicht wird bei 850 °C thermisch behandelt.

Es erfolgt danach die Aufbringung der Kontaktelektrode mit Abmessungen von 11 mm Durchmesser auf der Trägerseite über der Öffnung der Durchkontaktierung mittels Siebdruck einer Dickschichtpaste, enthaltend Silber. und anschließender thermischer Behandlung bei 850 °C.

Anschließend erfolgt die Polung des so aufgebrachten Schwingungserzeugers.

Die so hergestellte Elektrode wurde in Elektrolysen in schwefelsaurer oder alkalischer Lösung der Konzentration 0,001 - 5 Mol/l eingesetzt. Die Stromdichten lagen dabei bei 100 mA/cm². Die Ultraschalleinkopplung erfolgte bei den zuvor ermittelten Resonanzfrequenzen von 9,8 und 19,3 MHz. Die elektrische Kontaktierung von elektrochemischer Elektrode und die des Piezoelements erfolgten jeweils von einer dem Elektrolyten abgewandten Seite (Trägerseite) des Bauelements aus. Das System zeigte nach einer Einsatzdauer von 100 h keine Einschränkungen der Funktion.

### Ausführungsbeispiel 2b

Auf einem metallischen Trägersubstrat mit Abmessungen analog Beispiel 2a, aus einem Titanwerkstoff der Grades 1.4 wird durch andische Oxidation in halbkonzentrierter Schwefelsäure bei 30°C und bei einer anfänglichen Stromdichte von >50 mA/cm2 oder durch thermische Oxidation bei 900°C in Luft eine TiO2-Oxidschicht erzeugt.

Die weitere Herstellung der Elektrode erfolgt analog Beispiel 2a.

### Ausführungsbeispiel 3

In einer Ausführungsform mit thermochemisch erzeugtem Sb₂O₃/SnO₂ als elektrochemisch aktiver Schicht wurde die 2,54 x 2,54 große Elektrode mit Piezoanregung, hergestellt analog Beispiel 2, zur Oxidation von Fe²⁺ zu Fe³⁺ genutzt. die Elektrode in eine kleinmaßstäbliche Elektrolysezelle als Anode eingebaut. Als Kathode wurde Titanblech grade 7, als Elektrolytlösung in Anoden- und Kathodenraum 1 M H₂SO₄ verwendet. Die Trennung zwischen Anoden- und Kathodenraum erfolgte mit einer Anionenaustauscher-Membran. Als Modellreaktion fungierte die anodische Oxidation von 10⁻³ M Fe(II) zu Fe(III), die Fe(III). Die Konzentration wurde während des Versuchs auf bekannte Weise mittels iodometrischer Titration mit 0,01 N Na₂S₂O₃ bestimmt. Zur Charakterisierung der synergistischen Wirkung der Ultraschallanregung auf die elektrochemische Umsetzung wurden Versuche entweder nur galvanostatisch bei l= 5 mA, nur mit Ultraschallanregung (19,3 MHz, 10 V_{PP} Amplitude) oder mit beiden Funktionaltäten kombiniert durchgeführt.

Dabei wurden folgende Geschwindigkeitskonstanten k (Reaktion pseudo-erster Ordnung; jeweils 3 Versuche) erreicht: 0,37 h⁻¹ ± 0,14 bei 3 mA; 0,19 h⁻¹ ± 0,06 bei 19,3 MHz und 1,20 h⁻¹ ± 0,20 bei der Kombination beider Parameter.

Die Varianzanalyse (einfache ANOVA) ergab einen signifikanten Unterschied bei 95% statistischer Sicherheit zwischen den Geschwindigkeitskonstanten der einzelnen Funktionalitäten (Strom oder Ultraschall) und der Kombination beider. Diese deutliche Erhöhung der Reaktionsgeschwindigkeit bei Nutzung der Bifunktionalität des Elektrodensystems spiegelt sich auch im Synergieeffekt von 2,36 (Synergieeffekt = k_{(EC+US)}/(k_{EC}+k_{US}); EC-elektrochemisch, US-Ultraschall) wider. Die nach 1 Stunde erreichten Stromausbeuten lagen bei 39 % (kombiniert) bzw. 25% (nur elektrochemisch). Der Durchfluss durch Anoden- und Kathodenraum der Zelle war in allen Fällen identisch. Die Temperatur wurde durch Thermostatierung der Vorlagegefäße konstant gehalten und schwankte während der Versuche um maximal 1 Grad.

### Ausführungsbeispiel 4

In einer zweite Versuchsreihe wurden nach dem obigen Verfahren hergestellte Grundsubstrate auf Al₂O₃-Basis mit Durchkontaktierung aus Pt und rückwärtig aufgebrachtem Piezolement wahlweise mit Anodencoatings, bestehend aus vorgenannten Antimon-Zinn-Mischoxid, aus Bismuth-Zinn-Mischoxid mit einem Bi₂O₃-Anteil von 5-15% oder aus hydrothermal aufgebrachtem Iridiumoxid beschichtet und in einer Elektrolysezelle, wie in Fig. 1 dargestellt, die Umsetzung von verschiedenen endokrin wirksamen organischen Spurenstoffen in pHneutraler Lösung an diesen Anoden mit und ohne Ultraschalleinkopplung 19,3 MHz, 10 V_{PP} Amplitude bei Stromdichten von 5 - 25 mA/cm² an Lösungen untersucht, die zu Versuchsbeginn jeweils 10 mg/l der in Tabelle 1 genannten Spurenstoffe enthielten. Im Falle von Ethinylestradiol lag die Ausgangskonzentration bei 1 mg/l. Dabei wurden die in Tabelle 1 aufgeführten Ergebnisse erzielt:

**Tabelle 1: Ergebnisse der Umsetzung organischer Spurenstoffe**

| Anodencoating auf Al₂O₃-Substrat | umgesetzte Verbindung | 90% Umsatz nach (h) ohne Ultraschall | 90% Umsatz nach (h) mit Ultraschall |
|---|---|---|---|
| Sb₂O₃/SnO₂ | Ibuprofen | 6 | <4 |
| | Diclofenac | 3 | <2,0 |
| | Ethinylestradiol | 6 | <3 |
| | Nonylphenol | 2 | <1,5 |
| Bi₂O₃/SnO₂ | Ibuprofen | 7 | <3,5 |
| | Diclofenac | 3 | <2 |
| | Ethinylestradiol | >6 | >6 |
| | Nonylphenol | 2,5 | <1,5 |
| IrO₂ | Ibuprofen | 6 | 3 |
| | Diclofenac | 3 | <2 |
| | Ethinylestradiol | >6 | >6 |

Zur Ermittlung der Umsätze wurden die Ausgangslösungen durch Zugabe von Aliquoten chemisch identischer C-14-markierter Verbindungen getracert und der Umsatz via LSC-Messungen (Liquid Szintillation Counting) aus der Abnahme der C-14-Aktivität ermittelt.

Es zeigt sich, dass sich die Dauer der Umsetzung organischer Spurenstoffe signifikant reduziert, wenn die Elektrode während der Elektrolyse in Ultraschallschwingungen versetzt wird.

### Ausführungsbeispiel 5

In einem weiteren Anwendungsbeispiel wurde das in Beispiel 2 beschriebene. Fertigungsverfahren zur Herstellung einer planaren Elektrodengrundstruktur mit 10 cm x 10 cm Fläche mit insgesamt 12 integrierten Piezolementen in Reihen von 3x4 Elementen für die Anregung genutzt. Zweckmäßigerweise können dabei die elektrischen Kontaktierungen zu zwei Gruppen zusammengefasst werden, sodass letztlich, auch bei Maßstabsvergrößerung, nur mindestens zwei galvanisch getrennte Elektrodenkontakte benötigt werden. Die so gefertigte Elektrode wurde sodann in eine Elektrolysezelle eingebaut, die ansonsten durch die EP05 009 918.3 - 1370 näher beschrieben ist und für die Elektrolyse von Lösungen eingesetzt, die entweder die o.g. Spurenstoffe enthielten oder bei denen es sich um die in EP05 009 918.3 genannten sulfatreichen bzw. schwefelsauren Wässer handelte.

Analog Beispiel 4 wurden Elektrolytlösungen, enthaltend chemisch identische C-14-markierte Verbindungen, umgesetzt.

Die Ergebnisse sind in Tabelle 2 dargestellt:

| Anodencoating auf Al₂O₃-Substrat | umgesetzte Verbindung | 90% Umsatz nach (h) ohne Ultraschall | 90% Umsatz nach (h) mit Ultraschall |
|---|---|---|---|
| Sb₂O₃/SnO₂ | Diclofenac | 2 | < 1 |
| | Paracetamol | >8 | <4 |
| Pt/Ti | Diclofenac | 1 | <1 |
| | Paracetamol | >4 | <1,5 |

Die für die Verminderung der Spurenstoffkonzentration auf 10% des jeweiligen Ausgangswertes erforderliche Verweilzeit konnte dabei bei Anwendung jeweils gleicher Stromdichten um 65 % im Vergleich zu Versuchen ohne Ultraschalleinkopplung verringert werden.

### Ausführungsbeispiel 6

Bei der Behandlung der o.g. schwefelsauren Wässer konnte die Ablagerung von Carbonaten von Calcium und Magnesium auf einem mit einer elektrochemisch aktiven Nickelschicht als Kathode beschichteten Al₂O₃-Substrat während einer Versuchsdauer von 50 h bei einer Stromdichte von 10 mA/cm² verhindert werden, wobei das schwefelsaure, sulfatreiche Wasser im Zulauf der Elektrolyse einen pH-Wert von 5,2 und im Ablauf einen pH-Wert von 8,5 - 9,0 aufwies. Die Zulaufkonzentration der Ionen von Ca und Mg lagen bei 320 bzw. 120 mg/l, die der Sulfatanionen bei 1200 mg/l.

### Bezugszeichenliste

1 - Behälter
2 - Spannungsquelle
3 - Elektroden
5 - Trägersubstrat
6 - Trägerseite
7 - elektrochemisch aktive Schicht
8 - Schwingungsanreger
9 - Anschlusspad
10 - Durchkontaktierung
11 - Spannungsquelle (für Schwingungserzeuger)
12 - Grundelektrode eines Piezo- Schwingungserzeugers
13 - Piezoschicht eines Piezo- Schwingungserzeugers
14 - Deckelektrode eines Piezo- Schwingungserzeugers
15 - Elektrolyt
16 - Anregerelektrode für Schwingungserzeuger
17 - Drahtbonding zur Kontaktierung des Schwingungserzeugers
18 - elektrochemisch aktive Schicht der Gegenelektrode

## Patentansprüche

1. Elektrode, aufweisend mindestens einen Schwingungserzeuger (8) und ein Trägersubstrat (5) mit einer Trägerseite (6) und einer elektrochemisch aktiven Seite (4) mit einer elektrochemisch aktiven Schicht (7), wobei die elektrochemisch aktive Schicht, mittels Anschlusspad (9) von der Trägerseite aus über elektrisch leitende Verbindungen (10) mit einer ersten Spannungsquelle (2) kontaktiert ist oder wobei die elektrochemisch aktive Schicht über seitlich herausgeführte Kontakte direkt mit der ersten Spannungsquelle (2) verbunden ist,
**dadurch gekennzeichnet, dass** der mindestens eine Schwingungserzeuger (8) auf der Trägerseite (6) auf das Trägersubstrat (5) aufgebracht oder in die Oberfläche des Trägersubstrats (5) eingebettet ist, dass der Schwingungserzeuger (8) mit der ersten Spannungsquelle (2) oder einer weiteren Spannungsquelle (11) elektrisch kontaktiert ist und
dass das Trägersubstrat (5) teilweise oder vollständig aus einem keramischen Material und/oder mindestens einem Ventilmetall aufgebaut ist oder ein keramisches Material und/oder mindestens ein Ventilmetall umfasst.

2. Elektrode nach Anspruch 1, **dadurch gekennzeichnet, dass** sich zwischen dem Trägersubstrat (5) und der elektrochemisch aktiven Schicht (7) eine raster- oder netzförmige Schicht aus einem Material mit hoher elektrischer Leitfähigkeit befindet.

3. Elektrode nach einem der Ansprüche 1 oder 2, **dadurch gekennzeichnet, dass** der mindestens eine Schwingungserzeuger (8) ein Piezoaktor ist.

4. Elektrode nach Anspruch 3, **dadurch gekennzeichnet, dass** der Piezoaktor eine Grundelektrode (12), eine Deckelektrode (13) und eine dazwischen angeordnete Piezoschicht oder piezoelektrische Schicht (14) umfasst.

5. Elektrode nach einem der Ansprüche 1 bis 4 **dadurch gekennzeichnet, dass** die mit dem mindestens einen Schwingungserzeuger (8) elektrisch verbundene Spannungsquelle (11) eine Wechselspannungsquelle oder eine gepulste Spannungsquelle ist.

6. Elektrode nach einem der Ansprüche 1 bis 5, **dadurch gekennzeichnet, dass**, wenn das Trägersubstrat (5) mindestens ein Ventilmetall umfasst oder aus mindestens einem Ventilmetall aufgebaut ist, zwischen Trägersubstrat (5) und Schwingungserzeuger (8) eine elektrisch schlecht oder nicht leitende Zwischenschicht angeordnet ist.

7. Elektrode nach einem der Ansprüche 1 bis 6, **dadurch gekennzeichnet, dass** mehrere Schwingungserzeuger (8) in regelmäßigen Abständen auf der Trägerseite angeordnet sind.

8. Elektrode nach einem der Ansprüche 1 bis 6, **dadurch gekennzeichnet, dass** das Trägersubstrat (5) röhrenförmig ist, wobei die Außenseite der Röhre die Trägerseite (6) des Trägersubstrats (5) und die Innenseite der Röhre der elektrochemisch aktiven Seite (4) des Trägersubstrats entspricht und der mindestens eine Schwingungserzeuger (8) auf der Außenseite der Röhre angeordnet ist.

9. Elektrode nach einem der Ansprüche 1 bis 7, **dadurch gekennzeichnet, dass** die elektrisch leitenden Verbindungen (10) Durchkontaktierungen sind.

10. Elektrolysezelle enthaltend, mindestens ein Elektrodenpaar, umfassend eine erste Elektrode (3a) und eine zweite Elektrode (3b), wobei das Elektrodenpaar mit einer ersten Spannungsquelle (2) elektrisch leitend verbunden ist, wobei mindestens die erste Elektrode (3a) und/oder die zweite Elektrode (3b) des Elektrodenpaares eine Elektrode nach Anspruch 1 wobei das Elektrodenpaar so angeordnet ist, dass die elektrochemisch aktive Schicht (7) der mindestens einen Elektrode im Betriebsfall mit einem Elektrolyten in einem Behälter (1) in Kontakt gebracht werden kann und wobei die mindestens eine Elektrode, die mindestens einen integrierten Schwingungserzeuger (8) enthält, jeweils so angeordnet ist, dass der Schwingungserzeuger (8) nicht mit dem Elektrolyten in Kontakt kommt.

11. Elektrolysezelle nach Anspruch 10, **dadurch gekennzeichnet, dass** mindestens eine Elektrode mindestens eines Elektrodenpaares eine Elektrode gemäß einem der Ansprüche 1 bis 9 ist.

12. Verwendung einer Elektrode nach einem der Ansprüche 1 bis 9 in einem Elektrolyse- und/oder Elektrodialyseprozess.

13. Verfahren zur Herstellung einer Elektrode gemäß einem der Ansprüche 1 bis 9 mit den Schritten:
a) Bereitstellen eines Trägersubstrats mit einer ersten und einer zweiten Seite wobei das Trägersubstrat teilweise oder vollständig aus einem keramischen Material und/oder mindestens einem Ventilmetall aufgebaut ist oder ein keramisches Material und/oder mindestens ein Ventilmetall umfasst
b) Aufbringen einer elektrochemischen Funktionsschicht (7) auf die erste Seite des Trägersubstrats
c) Aufbringen der Funktionsschichten mindestens eines Schwingungserzeugers (8) auf die zweite Seite des Trägersubstrats
d) Aufbringen einer Funktionsschicht für das Anschlusspad (9) auf die zweite Seite des Trägersubstrats.

14. Verfahren nach Anspruch 13, **dadurch gekennzeichnet, dass** vor Schritt b) die Schritte
e) Einbringen mindestens einer durchgehenden Öffnung durch dieWandung des Substrats, welche die erste und die zweite Seite des Substrats miteinander verbindet, und
f) Einbringen eines elektrisch leitenden Materials in die Öffnung des Substrates erfolgen.

15. Verfahren nach Anspruch 14, **dadurch gekennzeichnet, dass** vor oder nach den Schritten e) und f), aber in jedem Fall vor Schritt b) das Aufbringen eines netz- oder gitterförmigen Stromverteilers aus einem Material mit hoher elektrischer Leitfähigkeit auf die erste Seite des Trägersubstrats erfolgt.

16. Verfahren nach einem der Ansprüche 13 bis 15, durch gekennzeichnet, dass, wenn das Trägersubstrat aus mindestens einem Ventilmetall aufgebaut ist oder mindestens ein Ventilmetall umfasst, vor Schritt c) eine elektrisch schlecht oder nicht leitende Zwischenschicht angeordnet auf der zweiten Seite des Trägersubstrats angeordnet wird.

17. Verfahren nach einem der Ansprüche 13 bis 16, **dadurch gekennzeichnet, dass** das Aufbringen der Funktionsschichten von elektrochemisch aktiver Schicht, Schwingungserzeuger und/oder Anschlusspad mittels Strukturierungsverfahren ausgewählt aus Siebdruck und / oder Inkjet-, Stempel- und/oder Aerosoldruck und/oder chemischen und/oder physikalischen Verfahren erfolgt.

18. Verfahren nach einem der Ansprüche 13 bis 17, **dadurch gekennzeichnet, dass** der Siebdruck mittels lokal definierten Auftrags von pastösen Dickschichtsuspensionen erfolgt.

## Claims

1. Electrode, comprising at least one oscillation generator (8) and a carrier substrate (5) with a carrier side (6) and an electrochemically active side (4) with an electrochemically active layer (7), wherein the electrochemically active layer, by means of a connector pad (9) from the carrier side via electrically conductive connections (10) is connected to a first voltage source (2) or wherein the electrochemically active layer is connected directly to the first voltage source (2) via laterally protruding contacts,
**characterised in that** the at least one oscillation generator (8) is applied to the carrier substrate (5) on the carrier side (6) or is embedded in the surface of the carrier substrate (5), **in that** the oscillation generator (8) is electrically contacted with the first voltage source (2) or a further voltage source (11) and **in that** the carrier substrate (5) is partially or completely composed of a ceramic material and/or at least one valve metal or comprises a ceramic material and/or at least one valve metal.

2. Electrode according to claim 1, **characterised in that** between the carrier substrate (5) and the electrochemically active layer (7) there is a grid-shaped or net-shaped layer made of a material with high electrical conductivity.

3. Electrode according to one of claims 1 or 2, **characterised in that** the at least one oscillation generator (8) is a piezo actuator.

4. Electrode according to claim 3, **characterised in that** the piezo actuator comprises a base electrode (12), a cover electrode (13) and a piezo layer or piezoelectric layer (14) arranged therebetween.

5. Electrode according to one of claims 1 to 4, **characterised in that** the voltage source (11) electrically connected to the at least one oscillation generator (8) is an AC voltage source or a pulsed voltage source.

6. Electrode according to one of claims 1 to 5, **characterised in that**, if the carrier substrate (5) comprises at least one valve metal or is constructed from at least one valve metal, an electrically poorly conductive or non-conductive intermediate layer is arranged between the carrier substrate (5) and the oscillation generator (8).

7. Electrode according to one of claims 1 to 6, **characterised in that** multiple oscillation generators (8) are arranged at regular intervals on the carrier side.

8. Electrode according to one of claims 1 to 6, **characterised in that** the carrier substrate (5) is tubular, the outer side of the tube corresponding to the carrier side (6) of the carrier substrate (5) and the inner side of the tube corresponding to the electrochemically active side (4) of the carrier substrate and the at least one oscillation generator (8) being arranged on the outer side of the tube.

9. Electrode according to one of claims 1 to 7, **characterised in that** the electrically conductive connections (10) are vias.

10. Electrolytic cell containing at least one electrode pair comprising a first electrode (3a) and a second electrode (3b), wherein the electrode pair is electrically conductively connected to a first voltage source (2), wherein at least the first electrode (3a) and/or the second electrode (3b) of the electrode pair is an electrode according to claim 1, wherein the electrode pair is arranged in such a way that the electrochemically active layer (7) of the at least one electrode can be brought into contact with an electrolyte in a container (1) during operation, and wherein the at least one electrode, which contains at least one integrated oscillation generator (8), is arranged in each case in such a way that the oscillation generator (8) does not come into contact with the electrolyte.

11. Electrolysis cell according to claim 10, **characterised in that** at least one electrode of at least one electrode pair is an electrode according to one of claims 1 to 9.

12. Use of an electrode according to any one of claims 1 to 9 in an electrolysis and/or electrodialysis process.

13. Process for producing an electrode according to any one of claims 1 to 9, comprising the steps of
a) providing a carrier substrate with a first and a second side, wherein the carrier substrate is partially or completely composed of a ceramic material and/or at least one valve metal or comprises a ceramic material and/or at least one valve metal
b) applying an electrochemical functional layer (7) to the first side of the carrier substrate
c) applying the functional layers of at least one oscillation generator (8) to the second side of the carrier substrate
d) applying a functional layer for the connector pad (9) to the second side of the carrier substrate.

14. Process according to claim 13, **characterised in that**, before step b), the steps
e) introduction of at least one continuous opening through the wall of the substrate, which connects the first and second sides of the substrate to one another, and
f) introducing an electrically conductive material into the opening of the substrate
are carried out.

15. Process according to claim 14, **characterised in that** before or after steps e) and f), but in any case before step b), a net- or grid-shaped current distributor made of a material with high electrical conductivity is applied to the first side of the carrier substrate.

16. Process according to one of claims 13 to 15, **characterised in that**, if the carrier substrate is composed of at least one valve metal or comprises at least one valve metal, an electrically poorly conductive or non-conductive intermediate layer is arranged on the second side of the carrier substrate before step c).

17. Process according to one of claims 13 to 16, **characterised in that** the application of the functional layers of electrochemically active layer, oscillation generator and/or connection pad is carried out by means of structuring processes selected from screen printing and/or inkjet, stamp and/or aerosol printing and/or chemical and/or physical processes.

18. Process according to one of claims 13 to 17, **characterised in that** the screen printing is carried out by means of locally defined application of pasty thick-film suspensions.

## Revendications

1. Electrode présentant au moins un générateur d'oscillations (8) et un substrat de support (5) avec un côté de support (6) et un côté électrochimiquement actif (4) avec une couche électrochimiquement active (7), la couche électrochimiquement active étant mise en contact avec une première source de tension (2) au moyen d'une plage de connexion (9) à partir du côté de support par l'intermédiaire de liaisons électriquement conductrices (10) ou la couche électrochimiquement active étant reliée directement à la première source de tension (2) par l'intermédiaire de contacts sortant latéralement,
**caractérisée en ce que** le au moins un générateur d'oscillations (8) est appliqué sur le substrat de support (5) au côté de support (6) ou est noyé dans la surface du substrat de support (5), **en ce que** le générateur d'oscillations (8) est en contact électrique avec la première source de tension (2) ou une ultérieure source de tension (11) et **en ce que** le substrat de support (5) est constitué partiellement ou entièrement d'un matériau céramique et/ou d'au moins un métal de valve ou comprend un matériau céramique et/ou au moins un métal de valve.

2. Electrode selon la revendication 1, **caractérisée en ce qu'**entre le substrat de support (5) et la couche électrochimiquement active (7) se trouve une couche en forme de grille ou de réseau en un matériau à haute conductivité électrique.

3. Electrode selon l'une des revendications 1 ou 2, **caractérisée en ce que** ledit au moins un générateur d'oscillations (8) est un actionneur piézoélectrique.

4. Electrode selon la revendication 3, **caractérisée en ce que** l'actionneur piézoélectrique comprend une électrode de base (12), une électrode de couverture (13) et une couche piézo ou une couche piézoélectrique (14) disposée entre elles.

5. Electrode selon l'une des revendications 1 à 4, **caractérisée en ce que** la source de tension (11) reliée électriquement à l'au moins un générateur de d'oscillations (8) est une source de tension alternative ou une source de tension pulsée.

6. Electrode selon l'une des revendications 1 à 5, **caractérisée en ce que**, lorsque le substrat de support (5) comprend au moins un métal valve ou est constitué d'au moins un métal valve, une couche intermédiaire peu ou pas conductrice électriquement est disposée entre le substrat de support (5) et le générateur de d'oscillations (8).

7. Electrode selon l'une des revendications 1 à 6, **caractérisée en ce que** plusieurs générateurs d'oscillations (8) sont disposés à intervalles réguliers sur le côté de support.

8. Electrode selon l'une des revendications 1 à 6, **caractérisée en ce que** le substrat de support (5) est tubulaire, le côté externe du tube correspondant à le côté de support (6) du substrat de support (5) et le côté interne du tube correspondant à le côté électrochimiquement active (4) du substrat de support, ledit au moins un générateur d'oscillations (8) étant disposé sur le côté externe du tube.

9. Electrode selon l'une des revendications 1 à 7, **caractérisée en ce que** les connexions électriquement conductrices (10) sont des vias.

10. Cellule d'électrolyse contenant au moins une paire d'électrodes, comprenant une première électrode (3a) et une deuxième électrode (3b), la paire d'électrodes étant reliée de manière électriquement conductrice à une première source de tension (2), au moins la première électrode (3a) et/ou la deuxième électrode (3b) de la paire d'électrodes étant une électrode selon la revendication 1, la paire d'électrodes étant disposée de telle manière, que la couche électrochimiquement active (7) de l'au moins une électrode peut être mise en contact avec un électrolyte dans un récipient (1) en cas de fonctionnement et dans lequel l'au moins une électrode qui contient au moins un générateur d'oscillations intégré (8) est disposée respectivement de telle sorte que le générateur d'oscillations (8) n'entre pas en contact avec l'électrolyte.

11. Cellule d'électrolyse selon la revendication 10, **caractérisée en ce qu'**au moins une électrode d'au moins une paire d'électrodes est une électrode selon l'une des revendications 1 à 9.

12. Utilisation d'une électrode selon l'une quelconque des revendications 1 à 9 dans un procédé d'électrolyse et/ou d'électrodialyse.

13. Procédé de fabrication d'une électrode selon l'une des revendications 1 à 9, comprenant les étapes :
a) Préparation d'un substrat de support avec un premier et un deuxième côté, le substrat de support étant partiellement ou totalement constitué d'un matériau céramique et/ou d'au moins un métal de valve ou comprenant un matériau céramique et/ou au moins un métal de valve.
b) application d'une couche fonctionnelle électrochimique (7) sur le premier côté du substrat de support
c) application des couches fonctionnelles d'au moins un générateur d'oscillations (8) sur le deuxième côté du substrat de support
d) application d'une couche fonctionnelle pour la plage de connexion (9) sur le deuxième côté du substrat de support.

14. Procédé selon la revendication 13, **caractérisé en ce que**, avant l'étape b), les étapes
e) réalisation d'au moins une ouverture traversant la paroi du substrat et reliant le premier et le deuxième côté du substrat, et
f) l'introduction d'un matériau électriquement conducteur dans l'ouverture du substrat ont lieu.

15. Procédé selon la revendication 14, **caractérisé en ce qu'**avant ou après les étapes e) et f), mais en tout cas avant l'étape b), l'application sur le premier côté du substrat de support un distributeur de courant en forme de réseau ou de grille en un matériau à haute conductivité électrique a lieu.

16. Procédé selon l'une des revendications 13 à 15, **caractérisé en ce que**, lorsque le substrat de support est constitué d'au moins un métal valve ou comprend au moins un métal valve, avant l'étape c), une couche intermédiaire peu ou pas conductrice électriquement est disposée sur le deuxième côté du substrat de support.

17. Procédé selon l'une des revendications 13 à 16, **caractérisé en ce que** l'application des couches fonctionnelles de couche électrochimiquement active, du générateur d'oscillations et/ou de la plage de connexion s'effectue au moyen de procédés de structuration choisis parmi la sérigraphie et/ou l'impression par jet d'encre, l'impression par tampon et/ou l'impression par aérosol et/ou des procédés chimiques et/ou physiques.

18. Procédé selon l'une des revendications 13 à 17, **caractérisé en ce que** la sérigraphie est réalisée au moyen d'une application définie localement de suspensions pâteuses à couche épaisse.
